# EUROPEAN PATENT APPLICATION

(11) **EP 2 632 131 A1**
(43) Date of publication of application: **28.08.2013**
(21) Application number: 12156380.3
(22) Date of filing: 21.02.2012
(51) Int. Cl.: H04M 1/725, G06F 1/16

(54) **Method, apparatus, and system for providing a shared user interface**

(71) Applicant: Research In Motion Limited, Waterloo, ON N2L 3W8 (CA)
(72) Inventor: Eriksson, Marcus, 211 40 Malmö (SE); Gärdenfors, Dan Zacharias, 211 40 Malmö (SE); Lewin, Mathias, 211 40 Malmö (SE); Hallerström Sjöstedt, Svante Magnus Ulfstand, 211 40 Malmö (SE)
(74) Representative: Moore, Barry

(57) **Abstract**

Providing a shared user interface (300) can be achieved by an application running on a first electronic device (100) and a second electronic device (150) that is detected. A shared user interface can be generated based at least in part on the application and the detected device pairing. The shared user interface can comprise a first portion (305) and a second portion (310). The first portion can be displayed at the first electronic device. Data enabling a display of the second portion at the second electronic device can be transmitted to the second electronic device. Input data from at least one of the first electronic device and the second electronic device can be received at the first electronic device to yield received input data. In response to the received input data, at least one of the first portion and the second portion of the shared user interface can be modified based on the received input data.

## Description

### FIELD OF TECHNOLOGY

The present disclosure relates generally to user interface for electronic devices, and more specifically, to a method, apparatus, and system for providing a shared user interface for electronic devices.

### BACKGROUND

Electronic devices can include mobile stations such as cellular telephones, smart telephones, portable gaming systems, portable audio and video players, electronic writing or typing tablets, mobile messaging devices, personal digital assistants, and portable computers (such as tablet computers or laptop computers). Some of the electronic devices (including those just listed) can be portable, that is, readily transportable from place to place. Some of the electronic devices can be handheld, that is, sized and shaped to be held or carried in a human hand. Portability of such electronic devices has become an increasingly important feature and has affected the size and amount of visible area of displays of the electronic devices. For example, the size of the display of handheld and mobile electronic devices is often compromised to ensure the portability of such electronic devices. In some instances, the displays can become cluttered with multiple application and notification graphical user interfaces. For example, the a first graphical user interface can be displayed for an application currently running and being utilized on the electronic device, and a notification graphical user interface corresponding to an incoming message on the electronic device can be received and interrupt the currently running and utilized application. In another example, the graphical user interface for an application currently running on the electronic device can be too small for efficiently utilizing the application. Thus, a need exists for an improved graphical user interface for electronic devices.

### SUMMARY

There is provided a method comprising: detecting, at a first electronic device, an application running on the first electronic device at a first time, the first electronic device having an input interface; detecting, at the first electronic device, a device pairing, wherein a second electronic device is detected to yield a detected device pairing; generating, at the first electronic device, a shared user interface based at least in part on the application and the detected device pairing; displaying, at the first electronic device, a first portion of the shared user interface; transmitting, to the second electronic device, data enabling a display of a second portion of the shared user interface at the second electronic device; receiving, at the first electronic device, input data from at least one of the input interface and the second electronic device to yield a received input data; and modifying, at the first electronic device, the first portion of the shared user interface based at least in part on the received input data.

There is also provided an electronic device comprising: a display; an input interface communicatively coupled to the display; a processor communicatively coupled to the display and the input interface, the processor configured to execute instructions to: detect, via the processor, an application running on the first electronic device at a first time, the first electronic device having an input interface; detect, via the processor, wherein a second electronic device is detected to yield a detected device pairing; generate, via the processor, a shared user interface based at least in part on the application and the detected device pairing; display on the display a first portion of the shared user interface; transmit, via the communication interface, data enabling a display of a second portion of the shared user interface at the second electronic device; receive input data from at least one of the input interface and the second electronic device to yield a received input data; and modify, via the processor, the first portion of the shared user interface based at least in part on the received input data.

There is also provided a computer-readable storage medium storing instructions for controlling a device to perform a method comprising: detecting, at a first electronic device, an application running on the first electronic device at a first time, the first electronic device having an input interface; detecting, at the first electronic device, a device pairing, wherein a second electronic device is detected to yield a detected device pairing; generating, at the first electronic device, a shared user interface based at least in part on the application and the detected device pairing; displaying, at the first electronic device, a first portion of the shared user interface; transmitting, to the second electronic device, data enabling a display of a second portion of the shared user interface at the second electronic device; receiving, at the first electronic device, input data from at least one of the input interface and the second electronic device to yield a received input data; and modifying, at the first electronic device, the first portion of the shared user interface based at least in part on the received input data.

There is also provided a method comprising: detecting, at a first electronic device having an input interface, a device pairing, wherein a second electronic device running an application is detected to yield a detected device pairing; receiving, at the first electronic device, data from the second electronic device, the data being based at least in part on the detected device pairing and the application running on the second electronic device; generating, at the first electronic device, a first portion of a shared user interface based at least in part on the received data; displaying, at the first electronic device, the first portion of the shared user interface; receiving, at the first electronic device, input data from at least one of the input interface and the second electronic device to yield a received input data; modifying, at the first electronic device, the first portion of the shared user interface based at least in part on the received input data; and transmitting, to the second electronic device, the received input data received.

There is also provided a computer-readable storage medium storing instructions for controlling a device to perform a method comprising: detecting, at a first electronic device having an input interface, a device pairing, wherein a second electronic device running an application is detected to yield a detected device pairing; receiving, at the first electronic device, data from the second electronic device, the data being based at least in part on the detected device pairing and the application running on the second electronic device; generating, at the first electronic device, a first portion of a shared user interface based at least in part on the received data; displaying, at the first electronic device, the first portion of the shared user interface; receiving, at the first electronic device, input data from at least one of the input interface and the second electronic device to yield a received input data; modifying, at the first electronic device, the first portion of the shared user interface based at least in part on the received input data; and transmitting, to the second electronic device, the received input data.

There is also provided an electronic device comprising: a display; an input interface communicatively coupled to the display; a processor communicatively coupled to the display, the communication interface, and the input interface, the processor configured to execute instructions to: detect, via the processor, having an input interface, a device pairing, wherein a second electronic device running an application is detected to yield a detected device pairing; receiving, via the communication interface, data from the second electronic device, the data being based at least in part on the detected device pairing and the application running on the second electronic device; generate, via the processor, a first portion of a shared user interface based at least in part on the received data; display, at the display, the first portion of the shared user interface; receive, via the processor, input data from at least one of the input interface and the second electronic device; modify, via the processor, the first portion of the shared user interface based at least in part on the received input data; and transmit, to the second electronic device, via the communication interface, the received input data.

### BRIEF DESCRIPTION OF THE DRAWINGS

In order to describe the manner in which the above-recited and other advantages and features of the disclosure can be obtained, a more particular description of the principles briefly described above will be rendered by reference to specific examples thereof which are illustrated in the appended drawings. Understanding that these drawings depict only examples of the disclosure and are not therefore to be considered to be limiting of its scope, the principles herein are described and explained with additional specificity and detail through the use of the accompanying drawings in which:

Figure 1 is a block diagram of a first electronic device and a second electronic device communicatively coupled to one another to yield a device pairing;

Figure 2 is a logic flow chart of a method of providing a shared user interface;

Figure 3 is an exemplary system for providing a shared user interface comprising a first electronic device on which a first portion of the shared user interface is displayed and a second electronic device on which a second portion of the shared user interface is displayed;

Figure 4 is an exemplary system for providing a shared user interface illustrating that a input data entered at a second electronic device can modify a first portion of the shared user interface displayed at the first electronic device;

Figure 5 is an exemplary system for providing a shared user interface illustrating that a input data entered at a first electronic device can modify a second portion of the shared user interface displayed at the second electronic device;

Figure 6 is an exemplary system for providing a shared user interface illustrating that a chorded input entered at a first electronic device and a second electronic device can modify a first portion of the shared user interface displayed at the first electronic device;

Figure 7 is an exemplary system for providing a shared user interface illustrating that a second portion of the shared user interface can be generated based at least in part on a determined position of the second electronic device with respect to the first electronic device and an application running on the first electronic device;

Figure 8 is an exemplary system for providing a shared user interface illustrating that a pop-up window can be displayed on a second portion of a shared user interface so that the a first portion of the shared user interface currently being utilized by a user is not interrupted the pop-up window;

Figure 9 illustrates an exemplary electronic device system example;

Figure 10 illustrates a flow chart of an exemplary method of providing a shared user interface on a first device and a second device from the perspective of the first device;

Figure 11 illustrates a flow chart of an exemplary method of providing a shared user interface on a first device and a second device from the perspective of the second device.

Figure 12 is a block diagram illustrating an example of a configuration for a user interface framework;

Figure 13 is a block diagram illustrating example configurations for a UI client engine and a UI rendering engine; and

Figure 14 is a block diagram illustrating a UI client engine communicable with first and second UI rendering engines for distributing UI elements on first and second mobile device screens.

### DETAILED DESCRIPTION

Various examples of the disclosure are discussed in detail below. While specific implementations are discussed, it should be understood that this is done for illustration purposes only. A person skilled in the relevant art will recognize that other components and configurations may be used without parting from the spirit and scope of the disclosure.

Several definitions that apply throughout this document will now be presented. The phrase "communicatively coupled" is defined as connected, whether directly or indirectly through intervening components and is not necessarily limited to physical connections. The term "electronic device" is defined as any device that is capable of at least accepting data, transmitting data, and executing commands. An electronic device can include its own power source. For example, electronic devices can include, but are not limited to, mobile communication devices, mobile computers, smartphones, computing pads, computing tablets, desktop computers, laptop computers, netbooks, servers, routers, set-top phones, or other computing device capable of at least accepting data, transmitting data, and executing commands.

Portability of electronic devices has become an increasingly important feature for consumers and has affected the size and amount of visible area of displays of the electronic devices. For example, the size of the display of handheld and mobile electronic devices is often compromised to ensure the portability of such electronic devices. In some instances, the displays can become cluttered with multiple application and notification graphical user interfaces. For example, the a first graphical user interface can be displayed for an application currently running and being utilized on the electronic device, and a notification graphical user interface corresponding to an incoming message on the electronic device can be received and interrupt the currently running and utilized application. In another example, the graphical user interface for an application currently running on the electronic device can be too small for efficiently utilizing the application on the electronic device.

A system configured to practice the method of providing a shared user interface is described herein to address the shortcomings of conventional graphical user interfaces and displays of electronic devices, such as portable or mobile electronic devices. The following disclosure will first describe the system from the perspective of the first electronic device. A second example will be described from the perspective of the second electronic device.

A first exemplary embodiment of the system can include a first electronic device that is an electronic tablet and a second electronic device that is a smartphone. The first electronic device can have an input interface by which data can be user-inputted. For example, the input interface can be a touchscreen. Similarly, the second electronic device can have a second input interface by which data can be user-inputted. In an example where the second electronic device is a smartphone, the second user interface can include a keyboard, a touchscreen, or both a keyboard and a touch screen.

With regard to providing a shared user interface, the system can detect an application running on the first electronic device at a first time. For example, as will be described in further detail below, the application can be a word-processing application such as a presentation design application. The system can detect a device pairing. For example, the first electronic device can detect a second electronic device to yield a detected device pairing. For example, the first electronic device can detect that the second electronic device is communicatively coupled to the first device via a near-field-communication interface. The system can generate a shared user interface based at least in part on the application and the detected device pairing. For example, the system can generate the shared interface at the first electronic device. For example, a processor of the first electronic device can generate the shared user interface. The system can display a first portion of the shared user interface at the first electronic device. The system can transmit data enabling a display of the shared user interface. For example, the system can transmit the data from the first electronic device to the second electronic device. In at least one example, the transmitted data can enable the display of a second portion of the shared user interface at the second electronic device. Input data can be received by the system from at least one of the input interface of the first electronic device and from the second electronic device. The system can modify at least the first portion of the shared user interface based at least in part on the received input data.

With respect to the non-limiting example embodiment of the system having the an electronic tablet as the first electronic device and a smartphone as the second electronic device, the system can detect that the electronic tablet is running a presentation design application thereon. A smartphone can pair with the electronic tablet through a near-field-communication interface. In response to a detection of the paired smartphone, the electronic tablet can generate a shared user interface for the presentation design application to be shared by the electronic tablet and the smartphone. The electronic tablet can display a first portion of the shared user interface. For example, as the electronic tablet typically includes a larger display screen than the smartphone, the first portion can be a virtual workspace at which a majority of a user's attention to the presentation design application is focused. For example, the first portion can be the portion of the shared user interface that a presentation is designed and edited. The smartphone can display a second portion of the shared user interface. The second portion can be generated at the smartphone based at least in part on data sent by the electronic tablet to enable the display and generation of the second portion. The second portion can include a tool bar or a menu bar that includes selectable options and graphical items which a user can utilize to design a presentation displayed in the first portion of the shared user interface. When a selectable option or a graphical item is selected at the second portion of the shared user interface displayed on the smartphone, the first portion of the shared user interface can be modified. For example, if a thumbnail icon of a digital photo is selected from the second portion, the first portion can be modified to include a full-size version of the digital photo. In another example, if the second portion includes a virtual keyboard, inputs entered at the virtual keyboard can modify the first portion to include text corresponding to the entered inputs as well as the digital photo. Similarly, if an input is entered at the electronic tablet, the second portion displayed on the smartphone can be modified. For example, if the smartphone is currently displaying the virtual keyboard in the second portion, and a selection of the digital photo is made at the electronic tablet (for example, by touching the touchscreen of the electronic tablet), the second portion can be modified to display a tool bar associated with editing digital photos.

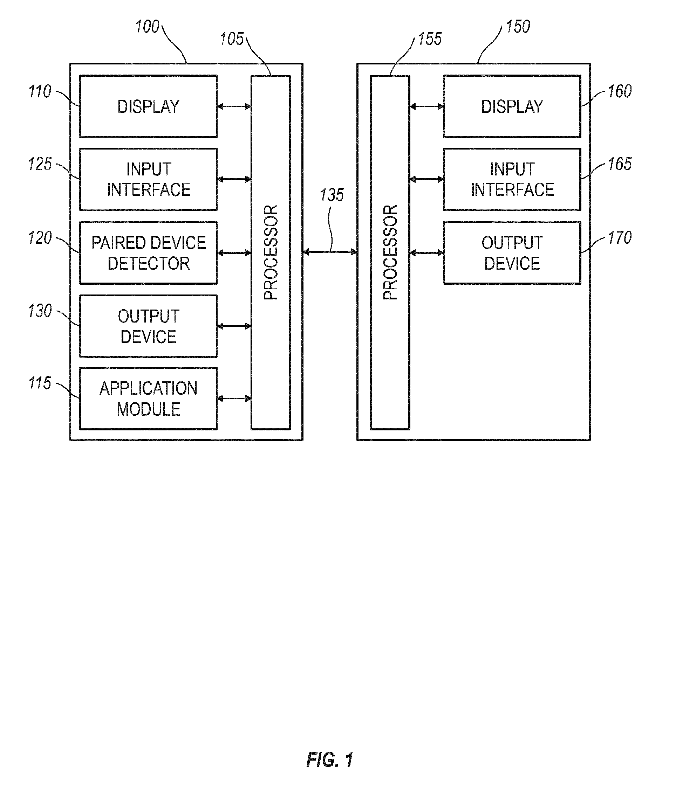

Further details regarding the system for providing a shared user interface will now be described with respect to Figures 1-11.

Figure 1 is a block diagram of a system for providing a shared user interface comprising a first electronic device 100 and a second electronic device 150. The first electronic device 100 can be a smartphone, a portable digital assistant (PDA), a cellphone, an electronic tablet, an electronic pad, a computer, a portable computer, a video-playback device, a DVD player, a Blu-Ray® player, a peer-to-peer-capable television (for example, a network television), a netbook, a peer-to-peer-capable audio-playback device, a peer-to-peer-capable headset, a peer-to-peer capable printer (for example, a network printer), a wireless-capable input device (for example, a mouse, a keyboard, or other input device) or any other electronic device. The second electronic device 150 can be of the same type of electronic device as the first electronic device 100 or can be of a different type of electronic device than the first electronic device 100. In Figure 1, the first electronic device 100 is an electronic tablet, and the second electronic device 150 is a smartphone.

In Figure 1, the first electronic device 100 and the second electronic device 150 are communicatively coupled. For example, the first electronic device 100 can be communicatively to the second electronic device 150 via a communication interface 135. The communication interface 135 can be a device pairing, such as a peer-to-peer (P2P) device pairing interface such as a Bluetooth® interface, a near-field-communication (NFC) interface, a near-field-communication-peer-to-peer (NFC P2P) interface, a Wi-Fi- interface, or any other device pairing interface that enables the first electronic device 100 and the second electronic device 150 to be communicatively coupled. In Figure 1, the first electronic device 100 and the second electronic device 150 are communicatively coupled by a device pairing via an NFC interface.

Also illustrated in Figure 1, the first electronic device 100 can include a paired device detector 120. The paired device detector 120 can detect a position of a second electronic device 150 with respect to the first electronic device 100. The paired device detector 120 can include embedded NFC tags and readers, embedded radio frequency identification tags and readers, infrared emitters and sensors, subsonic emitters and sensors, gyro sensors, gravitometers, motion sensors, embedded cameras, e-field sensors (such as electric field sensors), magnets, magnetometers, or other proximity-sensing devices and technology. In another embodiment, the paired device detector 120 can detect an orientation of the first electronic device 100 with respect to the second electronic device 150. For example, the paired device detector 120 can detect that the first electronic device 100 is in a portrait orientation and the second electronic device 150 is positioned below a short side of the first electronic device 100.

In Figure 1, the first electronic device 100 can include a display 105 and a processor 110. The processor 110 can be directly or indirectly coupled to the first electronic device 100. The processor 110 can be a processor assembly including one or more processors. The processor 110 can be a solid state processor, a core processor, or any other processor 110 configured to execute instructions for carrying out the method of providing a shared user interface as will be described herein. The display 105 can be a touchscreen, a touch-sensitive display, a liquid crystal display (LCD), a light emitting diode display (LED), an active matrix organic light emitting diode display (AMOLED), or any other display on which graphical information can be displayed.

The first electronic device 100 can include an input interface 125. The input interface 125 can be a user input interface. For example, the input interface 125 can be one or more of a keyboard, a keypad, a virtual keyboard, a plurality of keys, a single key, a mouse, a trackball, a trackpad, a touchpad, a touchscreen, a touch-sensitive display, a camera, a proximity sensor, a gesture sensor, an input device, an auxiliary input device, or any other input interface by which data can be input by a user. The input interface 125 can be integrated with the display 110. For example, the input interface 125 can be a touchscreen which is configured to display graphical information (such as a shared user interface) and also receive user inputs. The electronic device can include an output device 130. The output device 130 can be configured to output or transmit data from the first electronic device 100 to another electronic device. For example, the output device 130 can be a transmitter, a transceiver, or any other device 130 that can transmit or output data, for example to the second electronic device 150.

The first electronic device 100 can include an application module 115. In at least one example, the application module 115 can be stored on a non-transitory computer readable medium (not shown). The application module 115 can be communicatively coupled to the processor 105. The application module 115 can control the processor 105 to perform various actions. For example, the application module 115 can control the processor 105 to perform the steps of the method of providing a shared user interface to be described in further detail herein.

The second electronic device 150 can have a processor 155, a display 160, an input interface 165, and an output device 170 similar to those of the first electronic device 100. In Figure 1, the second electronic device 150 can include a display 160 and an input interface 165 that are integrated. For example, the second electronic device 150 can have a display 160 and an input interface 165 that are integrated as a touchscreen. The output device 170 of the second electronic device 150 can be a transceiver. For example, the transceiver can be configured to receive data (for example, from the first electronic device 100) and output or transmit data (for example, to the first electronic device 100). In other examples, the second electronic device 150 can include an output device 170 that is configured for transmitting data and can include another device (not shown) separate from the output device 170 that is configured for receiving data.

While Figure 1 illustrates two computing devices 100, 150, those of ordinary skill in the art will appreciate that more than two computing devices can be coupled to one another for providing a shared user interface. Additionally, fewer or more components can be included in either one of the two computing device 100, 150 than as illustrated in Figure 1.

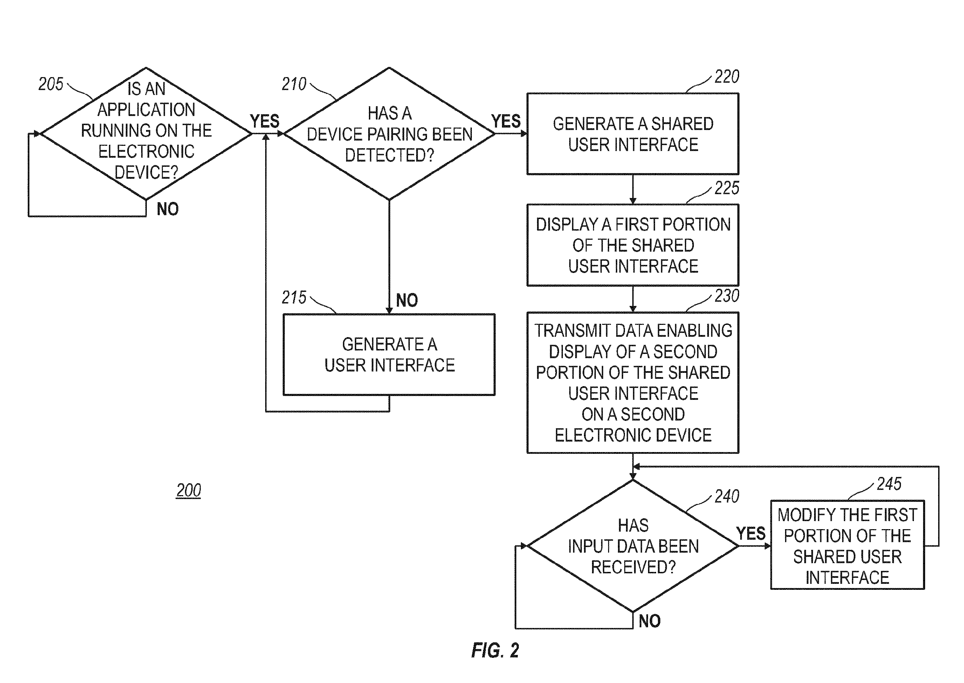

Figure 2 is a logic flow chart of a non-limiting example of a method of providing a shared user interface in accordance with the present disclosure. The exemplary method 200 illustrated in Figure 2 is provided by way of example, as there are a variety of ways to carry out the method. Additionally, while the exemplary method 200 is illustrated with a particular order of steps, those of ordinary skill in the art will appreciate that Figure 2 is by way of example, and the steps illustrated therein can be executed in any order that accomplishes the technical advantages of the present disclosure described herein and can include fewer or more steps than as illustrated. Each block shown in Figure 2 represents one or more processes, methods or subroutines, carried out in exemplary method 200. The steps illustrated in Figure 2 can be implemented in a system including a first electronic device 100 communicatively coupled to a second electronic device 150, for example via a device pairing connection, such as an NFC connection, as illustrated in Figure 1. For example, each block shown in Figure 2 can be carried out by the processor 105 of the first electronic device 100 illustrated in Figure 1. In another example, the method illustrated in Figure 2 can be carried out by the processor 155 of the second electronic device 150 or by both the processor 105 of the first electronic device 100 and the processor 155 of the second electronic device 150. In Figure 2, the method 200 illustrated in the flow chart illustrated will be described in relation to and make reference to the first electronic device 100 and the second electronic device 150 illustrated in Figure 2. Additionally, the method 200 of providing a shared user interface will be described from the perspective of the first electronic device 100 (for example, the electronic tablet).

In Figure 2, the method 200 can begin at block 205. At block 205, an application running on the first electronic device 100 can be detected at a first time. For example, the processor 105 of the first electronic device 100 can detect that an application is running on the first electronic device. The application can be associated with the application module 115 of the first electronic device 100 and/or can be stored on a remote computer-readable medium such as a cloud storage device, and internet-based storage device, or any other computer-readable medium on which an application can be stored. For example, the application can be a software application stored locally on the first electronic device 100, the second electronic device 150, or both. In other examples, the application can be a web-based application, a smartphone application, an electronic tablet application, or an internet-based application. Examples of applications can include, but are not limited to: a presentation design application, a word-processing application, an image editing application, an internet browsing application, a media playback application, a music application, a movie application, an email application, a social network application, a shopping application, or any other application which comprise at least one graphical user interface. In another example, the processor 155 of the second electronic device 150 can detect that an application is running on the first electronic device 100. For example, via processor 155 can detect an application is running on the first electronic device 100 via a communication interface 135 communicatively coupling the first electronic device 100 and the second electronic device 155. After an application running on the first electronic device 100 has been detected, the method 200 can proceed to block 210.

At block 210, a device pairing can be detected. For example, the device pairing can be detected at the first electronic device 100. The device pairing can be detected by the processor 105 of the first electronic device 100, the processor 155 of the second electronic device 150, both the processors 105, 155 of the first electronic device 100 and the second electronic device 150, at least one remote processor communicatively coupled to both the first electronic device 100 and the second electronic device 150, or any combination thereof. In at least one embodiment, the processor 105 of the first electronic device 100 can detect the device pairing. The detection of the device pairing can include a detection of the second electronic device 150 to yield a detected device pairing. For example, processor 105 can detect that a second electronic device 150 has paired with the first electronic device 100 via a communication interface 135, such as a Bluetooth® interface, a near-field-communication (NFC) interface, a near-field-communication-peer-to-peer (NFC P2P) interface, a Wi-Fi interface, or any other device pairing interface that enables the first electronic device 100 and the second electronic device 150 to be communicatively coupled. In Figure 2, block 210 can correspond to an electronic tablet 100 and a smartphone 150 paired to one another via Bluetooth. If a device pairing has not been detected, the method 200 can proceed to block 215. If a device pairing has been detected, the method can proceed to block 220.

At block 215, if a device pairing has not been detected, a user interface, such as a graphical user interface, can be generated. The user interface generated can be a non-shared user interface associated with and based at least in part on the application detected as running on the first electronic device 100. The user interface generated at block 215 can be different from a shared user interface. For example, the generated user interface can be one configured for display on a single display. The generated user interface can have settings, specifications, and properties corresponding to the settings, specifications, and properties of the first electronic device 100. For example, the user interface can be generated to a size, display, refresh rate, color balance, or other display properties that correspond to manufacturer-recommended settings for a display 110 of the first electronic device 100, user-specified settings for the display 110 of the first electronic device 100, application-specified settings, or any other settings, properties, and specifications associated with the first electronic device 100. If, however, a device pairing is detected at block 210, the method 200 can proceed to block 220.

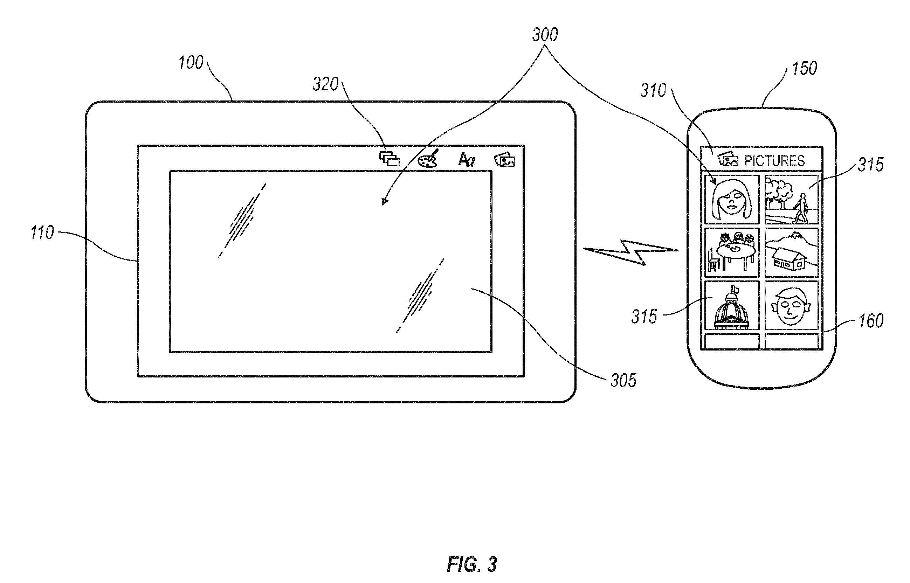

At block 220, if a device pairing has been detected, a shared user interface (shown as item 300 in Figures 3-6) can be generated. The shared user interface 300 can be a graphical user interface. The shared user interface 300 can be generated by: the processor 105 of the first electronic device 100, the processor 155 of the second electronic device 150, both the processors 105, 155 of the first electronic device 100 and the second electronic device 150, at least one remote processor communicatively coupled to both the first electronic device 100 and the second electronic device 150, or any combination thereof. The shared user interface 300 can be generated based at least in part on the application running on the first electronic device 100 and the detected device pairing. For example, the shared user interface 300 can be based at least in part on the application running on the first electronic device 100 and the detection of the second electronic device 150 that yields the device pairing. Compared to the user interface generated at block 215, the shared user interface 300 generated at block 220 can be configured for display on two electronic devices 100, 150. For example, the shared user interface 300 can be a graphical user interface that is shared between two electronic devices 100, 150. That is, the shared user interface 300 can have a first portion 305 and a second portion 310 (shown in Figures 3-6).

The first portion 305 can be a portion of the shared user interface 300 associated with the first electronic device 100. For example, the first portion 305 can be the portion of the shared user interface 300 displayed on the first electronic device 100. In at least one embodiment, the first portion 305 can be a primary display of the shared user interface 300. The primary display can include a virtual workspace, a virtual canvas, a virtual whiteboard, a virtual blank slate, a virtual stage, a virtual movie screen, or any other primary display where a majority of the user interaction will take place or where a majority of the user's focus or attention on the application will take place.

The second portion 310 can be a portion of the shared user interface 300 associated with the second electronic device 150. For example, the second portion 310 can be the portion of the shared user interface 300 that is displayed on the second electronic device. In at least one example, the second portion 310 can be a secondary display of the shared user interface 300. For example, the secondary display can include a menu, a virtual content collection, a virtual list of files, a virtual list of selectable items (for example, photos, documents, music, templates, videos, files, or other similar content), a virtual address book, a virtual contact list, a virtual toolbox, a virtual toolbar, a menu bar, a virtual file folder, an list of options, a list of actions, a virtual keyboard, a virtual keypad, a virtual input interface, a taskbar, a settings toolbar, a date selector, a calendar, a location selector, a map, a time selector, a contact selector, or any other secondary display that provides supplemental information, user interface components, and/or actionable information, that are associated with the primary display.

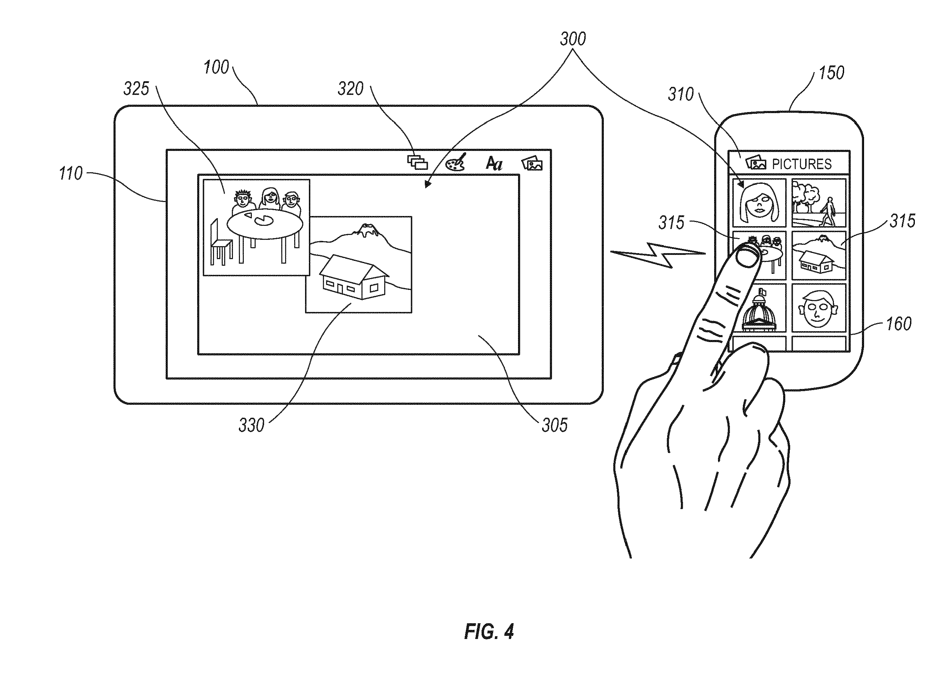

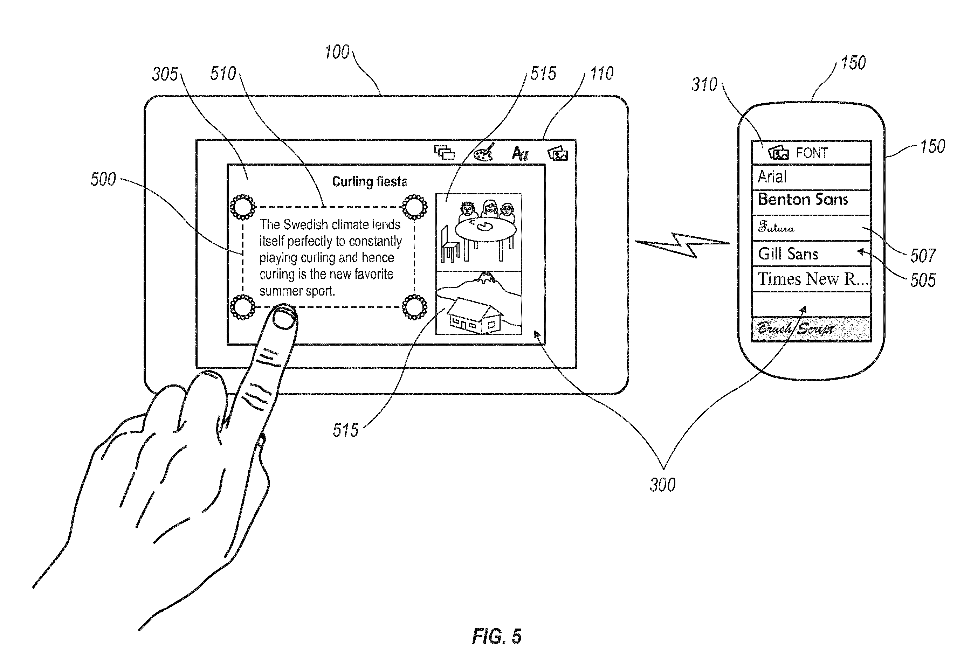

The shared user interface 300 generated can be based at least in part on the application detected as running on the first electronic device 100. For example, the shared user interface 300 generated can be based at least in part on a presentation design application running on the first electronic device 100. In such an embodiment, the shared user interface 300 based at least in part on the presentation design application can have a first portion and a second portion. For example, the first portion 305 can be a virtual workspace (shown in Figures 4 and 5) where a virtual presentation can be designed. The second portion 310 can be a menu (shown Figure 4 and 5) that contains items, options, and other actionable information which can be selected, designated, chosen or otherwise taken action on to design the virtual presentation provided on the first portion 305. In other embodiments, the shared user interface 300 can be generated based at least in part on a word-processing application, an image editing application, an internet browsing application, a media playback application, a music application, a movie application, an email application, a social network application, a shopping application, or any other application which includes graphical user interfaces that can benefit from comprising a first portion 305 and second portion 3100. After a shared user interface 300 is generated, the method 200 can proceed to block 225.

At block 225, a first portion 305 of the shared user interface 300 can be displayed. The processor 105 of the first electronic device 100 can execute instructions to display the first portion 305 of the shared user interface 310 on the display 110 of the first electronic device 100. In another example, the processor 155 of the second electronic device 100 can transmit a request to the processor 105 of the first electronic device 100 to display the first portion 305 of the shared user interface 310, at least one remote processor communicatively coupled to both the first electronic device 100 and the second electronic device 150, or any combination thereof can execute instructions to display the first portion 305 of the shared user interface 300 on the first electronic device 100.

In one embodiment, the first portion 305 can be displayed on the display 110 of the first electronic device 100. That is, the first portion 305 can be displayed on the electronic device that is designated as a primary device. The primary device can be the electronic device at which a majority of graphical information associated with the running application is displayed or the device at which a majority of the user's focus and attention is directed. For example, the primary device can be the electronic device which has been designated for displaying a primary display, a virtual workspace, a virtual canvas, a virtual whiteboard, a virtual blank slate, a virtual stage, a virtual movie screen, or any other primary display where a majority of the user interaction will take place or where a majority of the user's focus or attention on the application will take place. In at least one embodiment, as illustrated in Figure 3, the first portion 305 can be displayed on the display 110 of a first electronic device 100 that is an electronic tablet. In another example, the first portion 305 can be displayed on the display that is the larger of the display 110 of the first electronic device 100 and the display 160 of the second electronic device 150. In another embodiment, the first portion 305 of the shared user interface can be displayed on the second electronic device, for example, at the display 160 of the second electronic device 150. After the first portion 305 of the shared user interface is displayed, the method 200 can proceed to block 230.

At block 230, data enabling a display of the second portion 310 of the shared user interface 300 can be transmitted. For example, data enabling the display of the second portion 310 of the shared user interface 300 can be transmitted from the first electronic device 100 to the second electronic device 150. The second electronic device 150 can receive the transmitted data (for example, by the processor 155) to display the second portion 310 of the shared user interface 300 at the second electronic device 150. In one embodiment, the processor 105 of the first electronic device 100 can execute instructions to transmit (for example, via the output device 130) data enabling the display of the second portion 310 of the shared user interface 300. The data transmitted to the second electronic device 150 can include a request to generate the second portion 310 of the shared electronic device 150 at the second electronic device 150. The request can then be processed by the processor 155 of the second electronic device 150 to generate and display the second portion 310 of the shared user interface 300. As the second portion 310 can be displayed on a second electronic device 200, the virtual workspace of the first portion 305 displayed on the display 110 of the first electronic device 100 can be maximized and efficiently utilized. For example, if the first portion 305 is a virtual paint canvas associated with a painting application, the painting canvas of the first portion 305 can be maximized in size on the first electronic device 100 and free from other windows, such as tool bars or menus, as the tool bars or menus can be displayed on the second portion 310 of the shared user interface 300 that can be displayed on the second electronic device 150. In another example, where the processor 155 of the second electronic device 150 has generated the shared user interface 300, the processor 155 of the second electronic device 150 can display the second portion 310 of the shared user interface 300 at the second electronic device 150 and transmit data enabling the display of the first portion 305 of the shared user interface 300 to the first electronic device 100. After data enabling the display of the second portion 310 of the shared user interface 300 has been transmitted, the method 300 can proceed to block 240.

At block 240, a determination can be made as to whether input data has been received. For example, the determination can be made as to whether input data has been received at the first electronic device 100. The determination can be made by the processor 150 of the first electronic device 100, the processor 155 of the second electronic device 150, both the processor 105 of the first electronic device 100 and the processor 155 of the second electronic device 150, at least one remote processor communicatively coupled to both the first electronic device 100 and the second electronic device 150, or any combination thereof. Input data can include at least one of: input data entered at the input interface 125 of the first electronic device 100, input data entered at the input interface 165 of the second electronic device 150, an input entered simultaneously at the first electronic device 100 and the second electronic device 150 (for example, a chorded input), an input entered between the first electronic device 100 and the second electronic device 150 (for example, by tapping the first electronic device 100 and the second electronic device 150 against one another), or any other input data entered at the first electronic device 100, at the second electronic device 150, or both the first electronic device 100 and the second electronic device 150. For example, the input data can include actuations a keyboard, a keypad, a virtual keyboard, a plurality of keys, a single key, a mouse, a trackball, a trackpad, a touchpad, a touchscreen, a touch-sensitive display, a camera, a proximity sensor, a gesture sensor, an input device, an auxiliary input device, or any other input interface associated with one of the first electronic device 100 or the second electronic device 150 and by which data can be input by a user.

In at least one example, the input data can be received by a receiver or a transceiver communicatively coupled to one or both of the processors 105, 155 of the first electronic device 100 and the second electronic device 150. For example, block 240 can represent that the first electronic device 100 has received input data from the second electronic device 150, via the device pairing 13 5, for example. In another example, block 240 can represent that the second electronic device 150 has transmitted input data, via the output device 170 and the device pairing 135, for example, to the first electronic device 100. In such an example, the transmitted input data can be indicative of inputs entered at the input interface 165 of the second electronic device 150. If input data has been received, the method 200 can proceed to block 245.

At block 245, in response to the determination that input data has been received, the first portion 305 of the shared user interface 300 can be modified based at least in part on the received input data. The processor 105 of the first electronic device 100, the processor 155 of the second electronic device 150, both the processors 105, 110 of the first electronic device 100 and the second electronic device 150, one or more processors communicatively coupled to one or both of the first electronic device 100 and the second electronic device 150, or any combination thereof, can execute instructions or request that instructions be executed at the first electronic device 100 to modify the first portion 305 of the shared user interface 300. For example, graphical information, such as text information, videos, colors, font, images, icons, or other graphical information, associated with the first portion 305 of the shared user interface 300 can be modified based at least in part on the received input data. In at least one example, input data entered at the second electronic device 150 can be transmitted to the first electronic device 100 to modify the first portion 305 of the shared user interface 300.

In one embodiment, where the second portion 310 of the shared user interface 300 includes a file menu and an input is entered to select a file from the file menu, input data representative of the selected file can be transmitted to the first electronic device 100. The input data received by the first electronic device 100 can cause the processor 105 of the first electronic device 100 to execute instructions to modify the first portion 305 of the shared user interface 300. For example, the executed instructions can modify the first portion 305 to display the contents of the file selected at the second electronic device 150. Other illustrative examples of modifications to the first portion 305 of the shared user interface 300 will be described in more detail below with respect to Figures 3-8.

In other examples, input data entered at the first electronic device 100, input data simultaneously entered at both the first electronic device 100 and the second electronic device 150, input data entered sequentially from the first electronic device 100 and the second electronic device 150 can cause the processor 105 of the first electronic device 100, the processor 155 of the second electronic device 150, both the processors 105, 110 of the first electronic device 100 and the second electronic device 150, one or more processors communicatively coupled to one or both of the first electronic device 100 and the second electronic device 150, or any combination thereof, to execute instructions to modify the first portion 305 of the shared user interface 300.

Although not included in the method 200 illustrated in the flow chart of Figure 2, the method 200 can include modifying the second portion 310 of the shared user interface 300 based at least in part on received input data. The processor 105 of the first electronic device 100, the processor 155 of the second electronic device 150, both the processors 105, 110 of the first electronic device 100 and the second electronic device 150, one or more processors communicatively coupled to one or both of the first electronic device 100 and the second electronic device 150, or any combination thereof, can execute instructions or request that instructions be executed at the first electronic device 100 to modify the second portion 310 of the shared user interface 300.

For example, where the application running on the first electronic device 100 is a presentation design application, and where the first portion 305 is a virtual workspace or canvas for the designing the presentation and the second portion 310 is a toolbox, input data entered at the first electronic device 100 can cause a modification to the second portion of 310 of the shared user interface 300. For example, a selection or designation of a photo provided in the first portion 305 can cause the second portion 310 to be modified such that the tool box includes selectable or designatable options associated with selected photo of the first portion 305. Other illustrative examples of modifications to the second portion 310 of the shared user interface 300 will be described in more detail below with respect to Figures 3-8. In other examples, input data entered at the first electronic device 100, input data simultaneously entered at both the first electronic device 100 and the second electronic device 150, input data entered sequentially from the first electronic device 100 and the second electronic device 150 can cause the processor 155 of the first electronic device 100, the processor 155 of the second electronic device 150, both the processors 105, 110 of the first electronic device 100 and the second electronic device 150, one or more processors communicatively coupled to one or both of the first electronic device 100 and the second electronic device 150, or any combination thereof to execute instructions to modify the second portion 310 of the shared user interface 300.

The above-described method 200 is an example embodiment of the method of providing a shared user interface as presently disclose. By providing a shared user interface (for example, one that includes a first portion and a second portion), the shared user interface can be optimized to provide fewer distractions and clutter and more usable workspace on the user interface displayed on a first electronic device 100 as compared to non-shared user interfaces.

While the Figure 2 illustrates a particular order of steps, those skilled in the art will appreciate that the steps can be performed in a different order than as shown in Figure 2. Furthermore, those of ordinary skill in the art will appreciate that fewer or more steps can be included in the method of providing a shared user interface than as illustrated in Figure 2.

While the method 200 illustrated in Figure 2 has been described as being carried out by the processor 105 of the first electronic device 100, those of ordinary skill in the art will appreciate that the method 200 can be carried out by the second processor 155 of the second electronic device 150, by both the processor 105 of the first electronic device 100 and the second processor 155 of the second electronic device 150, by at least one remote processor communicatively coupled to both the first electronic device 100 and the second electronic device 150, or any combination thereof.

While the method 200 illustrated in Figure 2 has been described in relation to a device pairing between two electronic devices, those of ordinary skill in the art will appreciate that the device pairing can be between any number of electronic devices, so long as there are at least two electronic devices.

Non-limiting illustrative examples of a method of providing shared user interfaces will now be described with respect to Figures 3-8.

Figure 3 is an exemplary system for providing a shared user interface comprising a first electronic device 100 on which a first portion 305 of the shared user interface 300 is displayed and a second electronic device 150 on which a second portion 310 of the shared user interface 300 is displayed. In Figure 3, the first electronic device 100 is an electronic tablet but can be any other type of electronic device. The second electronic device 150 is a smartphone but can be any other type of electronic device. In Figure 3, the first electronic device 100 and the second electronic device 150 are paired via a device pairing, such as a Bluetooth® interface, a near-field-communication (NFC) interface, a near-field-communication-peer-to-peer (NFC P2P) interface, a Wi-Fi interface or any other device pairing interface that enables the first electronic device 100 and the second electronic device 150 to be communicatively coupled.

In the non-limiting example illustrated in Figure 3, a presentation design application 320 can be detected as running on the first electronic device 100. For example, the processor (not shown) of the first electronic device 100 can detect and determine the application currently running on the first electronic device 100. In response to the detection of the running presentation design application 320 and the paired second device 150, a shared user interface 300 can be generated, for example by the processor of the first electronic device 100. The shared user interface 300 can be based at least in part on the detected application 320 and the paired second electronic device 150. For example, the shared user interface 300 can be generated based on the type of presentation design application running (here, a presentation design application 320) and the type of paired second electronic device 150 (here, a smartphone). In the illustrated example of Figure 3, the instructions executed by the processor for generating the shared user interface can be embedded in the application module (shown in Figure 1 as 115) of the first electronic device 100. That is, the generation of the shared user interface 300 can be a part of the application framework of the application 320 running on the first electronic device 100.

In Figure 3, the shared user interface 300 comprises a first portion 305 and a second portion 310. The first portion 305 can be displayed, for example on the display 110, on the first electronic device 100. In Figure 3, the first portion 305 is a primary display of the shared user interface 300. In Figure 3, as the application 320 running on the first electronic device 100 is a presentation design application 320, the first portion 305 of the shared user interface 300 is a virtual workspace on which a presentation can be designed. As the first portion 305 is a primary display of the shared user interface 300, the first portion 305 can be displayed on the larger of the displays 110, 160 of the electronic devices 100, 150. In Figure 3, display 110 of the first electronic device is the larger of the displays 110, 160. However, in other examples, the first portion 305 can be displayed on the smaller of the displays 110, 160 (for example, if second electronic device 150 is designated as the primary device on which the user views and focuses his attention for interacting with the application 320).

In Figure 3, the second portion 310 of the shared user interface 300 can be displayed, for example on the display 160, on the second electronic device 150. As the first electronic device 100 is running a presentation design application 320 thereon, the second portion 310 of the shared user interface 300 can be a secondary display for the presentation design application 320. For example, in Figure 3, the second portion 310 comprises a content display, such as a collection of designatable user interface components. In Figure 3, the content display is a picture menu or a picture picker from which pictures 315 can be selected for addition to a presentation to be designed in the presentation workspace of the first portion 305. In other words, the second portion 310 can include a file folder of available picture, images, or other graphical items that can be utilized in designing a presentation provided in the virtual workspace of the first portion 305. As the second portion 310 includes the content display, the size of the virtual workspace is increased to maximize the amount of virtual workspace a user can utilize. For example, the size of the virtual workspace of the first portion 305 in Figure 3 is increased and maximized, as the content display of the second portion 310 is displayed on the second electronic device 150, thereby providing more virtual workspace on the first portion 305 for designing a presentation on the first electronic device 100. That is, there is more utilizable virtual workspace in the first portion 305 since the content display or other secondary displays such as menus, toolbars, file folders, etc. are provided on the second portion of the shared user interface 300 provided at the second electronic device 150.

In Figure 3, as the shared user interface 300 can be generated as part of the application framework of the application 320 running on the first electronic device, the shared user interface 300 can be an application-driven user interface that is shared between the first electronic device 100 and the second electronic device 110 rather than a streamed display of a user interface displayed on the first electronic device that is extended and streamed onto the display 160 of the second electronic device 100. Similarly, in such an example, as the shared user interface 300 is a user interface that can have a first portion 305 associated with and displayed on the first electronic device 110, and a second portion 310 associated with and displayed on the second electronic device 150, the shared user interface 300 can be shared between the two electronic devices 100, 150 rather than being a user interface that is displayed on the first electronic device 100 whose desktop is extended and streamed onto a second electronic device 150. Such a shared user interface 300 can provide for increased and enhanced functionality of an application 320 running on the first electronic device 100, an enhanced and user-friendly user interface, an increase in the efficient use of the displays 110, 160 of the electronic devices 100, 150, and an efficient use of processing power as fewer unnecessary program windows, notification windows, menus, and other graphical information are displayed on the electronic devices 100, 150 as the number of windows and menus displayed on the electronic device 100, 150 can be shared therebetween.

Examples of how inputted data from either or both of the first electronic device 100 and the second electronic device 150 can modify one or both of the first portion 305 and the second portion 310 of the shared user interface are illustrated in Figures 4-7.

Input Data Entered at the Second Electronic Device

Figure 4 is an exemplary system for providing a shared user interface comprising a first electronic device 100 on which a first portion 305 of the shared user interface 300 is displayed and a second electronic device 150 on which a second portion 310 of the shared user interface 300 is displayed, similar to that illustrated in Figure 3. Figure 4 illustrates the modification of the first portion 305 of the shared user interface 300 based on input data received at the second electronic device 150. In Figure 4, the display 160 of the second electronic device 150 is also an input interface. For example, the display 160 is a touchscreen which is configured to display graphical information and by which inputs can be entered. The can be entered at the touchscreen 160 via contacting, touching, or otherwise actuating the surface of the touchscreen display 160. In Figure 4, the application 320 running on the first electronic device 100 is a presentation design application but can be any other application comprising a shared user interface. In Figure 4, the shared user interface 300 comprises a first portion 305 having a virtual workspace for designing a presentation and a second portion 310 having a content display or a content picker comprising a plurality of selectable, designatable, actuable, or otherwise actionable graphical items. For example, the graphical items of the second portion 310 can be thumbnails 315, icons, or graphical representations of digital pictures 330 or images which can be included in a presentation designed in the virtual workspace of the first portion 305. In other examples, the graphical item can be an icon, file, folder, text, text box, a virtual button, a virtual key, or any other graphical item that can be selected, designated, or otherwise activated or actuated via an input received at the input interface of the second electronic device 150. The images, files, or content associated with the graphical items provided in the second portion 310 can be stored on a computer-readable non-transitory or transitory storage medium coupled to one or both of the first electronic device 100 and the second electronic device 150. For example, in Figure 4, the digital pictures associated with the thumbnails 315 provided in the second portion 310 can be stored on the second electronic device 150, on the first electronic device 100, on both the first electronic device 100 and the second electronic device 100, on a cloud storage device accessible by one or both of the first electronic device 100 and the second electronic device 150, or on any other remote transitory or non-transitory storage medium directly or indirectly coupled to one or both of the first electronic device 100 and the second electronic device 150.

In Figure 4, a graphical item of the second portion 310 of the shared user interface 300 displayed on the display 160 of the second electronic device 100 can be selected. For example, in Figure 4, the thumbnail 315 representing a digital picture can be selected via a tap, swipe, tap and hold, or other gesture or contact made at the surface of the touchscreen 160 of the second electronic device 150. When the graphical item, for example the thumbnail 315, in Figure 4 is selected, input data associated with that selection can be transmitted, for example, via an output device 170 (shown in Figure 1) of the second electronic device 150 to the first electronic device 100. The processor 105 (shown in Figure 1) of the first electronic device 100 can receive the input data transmitted by the second electronic device 100. The processor 105 can process the received input data associated with the selected picture 315 from the second portion 310. In response to processing the received input, the processor 105 can execute instructions or transmit a request to modify the first portion 305 of the shared user interface 300 displayed on the display 110 of the first electronic device 100. In Figure 4, the first portion 305 has been modified to display an enlarged picture 325 of the thumbnail 315 selected from the second portion 310 of the shared user interface. In Figure 4, the modified first portion 305 illustrates that the selected thumbnail 315 from the second portion 310 has been added to the virtual workspace of the first portion 305.

While Figure 4 illustrates that input data entered at the second electronic device 150 can modify the first portion 305 of the shared user interface 300, those of ordinary skill in the art will appreciate that input data entered at the second electronic device 150 can modify the second portion 310 of the shared user interface 300. For example, where the second portion 310 is a menu bar comprising more than one menus, an input entered at the second electronic device 100 corresponding to a designation or selection of one of the menus of the menu bar can transmit input data to the processor 105, 155 of one or both of the first electronic device 100 and the second electronic device 150 or to a remote processor coupled to one or both of the first electronic device 100 and the second electronic device 150. The transmitted input data can be processed, and instructions or a request to modify the second portion 310 can be made. In response, the second portion 310 can be modified to open and display the contents associated with the designated menu. For example, the second portion 310 can be modified such that the menu bar is replaced with the contents associated with the designated menu.

Input Data Entered at the First Electronic device

Figure 5 is an exemplary system for providing a shared user interface comprising a first electronic device 100 on which a first portion 305 of the shared user interface 300 is displayed and a second electronic device 150 on which a second portion 310 of the shared user interface 300 is displayed, similar to that illustrated in Figures 3 and 4. Figure 5 illustrates the modification of the first portion 305 and the second portion 310 of the shared user interface 300 based on input data entered at the first electronic device 100. Similar to Figure 4, in Figure 5, the display 110 of the first electronic device 100 and the display 160 of the second electronic device 150 are integrated with input interfaces. For example, the display 110 of the first electronic device 100 and the display 160 of the second electronic device 150 are touchscreens are configured to display graphical information and are input interfaces by which inputs can be entered. In Figure 5, the application 320 running on the first electronic device 100 can be a presentation design application. In Figure 5, the first portion 305 of the shared user interface 300 can be a virtual workspace associated with the presentation design application 320, and the second portion 310 can be a toolbar.

In Figure 5, a presentation-in-progress is provided in the virtual workspace of the first portion 305 of the shared user interface 300. In Figure 5, the presentation-in-progress provided in the first portion 305 includes items comprising two digital images 515, text information 500, and a title (not labeled). However, in other examples the presentation-in-progress can have fewer or more items that as illustrated in Figure 5. An input can be entered at the display 110 of the first electronic device 100. In Figure 5, the input can be a tap input made at the surface of the display 110 of the first electronic device 100. For example, the input can correspond to a designation or selection of the text information 500 provided on the first portion 305. Input data corresponding to the designation or selection of the text information 500 can be received and processed by the processor 105 (shown in Figure 1) of the first electronic device 100. For example, in response to receiving input data corresponding to a received input from the user interface (for example, the touchscreen 110), the processor 105 can execute instructions or request that the first portion 305 of the shared user interface 300 be modified based on the received input data. In Figure 5, the first portion 305 can be modified by displaying a dashed textbox 510 outlining the text information 500 provided on the first portion 305. The dashed textbox outlining 510 can indicate that the text information 500 has been designated or selected.

A subsequent input entered at the first electronic device 100 can be received by the processor 105 to further modify the first portion 305. For example, a swiping gesture can be entered at the first electronic device 100 after the text information 500 has been designated. In response to such swiping gesture, the input data can be received and processed by the processor 105 do modify the first portion 305 such that the text information 500 is moved to a location corresponding to a location where the swiping gesture terminated. Those of ordinary skill in the art will appreciate that other input data can be received at the first electronic device 100 and processed by the first electronic device 100 to modify the first portion 305 of the shared user interface 300. Those of ordinary skill in the art will also appreciate that the modifications to the first portion 305 can vary depending on the type of input data received and the application running on the first electronic device 100.

Figure 5 also illustrates how input data entered at the first electronic device 100 can modify the second portion 310 of the shared user interface 300. In Figure 5, the input data corresponds to a designation of text information 500. The input data can be transmitted to and processed by the processor 105, 155 of one or both of the first electronic device 100 and the second electronic device 150 or to a remote processor coupled to one or both of the first electronic device 100 and the second electronic device 150. The processor 105, 155 of one or both of the first electronic device 100 and the second electronic device 150, at least one remote processor coupled to one or both of the first electronic device 100 and the second electronic device 150, or any combination thereof can transmit instructions or a request to modify the second portion 310 of the shared user interface 300 based on the received input data. For example, in Figure 5, the received input data corresponding to the designation of text information 500 provided in the first portion 305 displayed on the first electronic device 100 can correspond to a modification of the second portion 310 where a previously-provided picture menu is replaced with a font menu 505. Such a modification to the second portion 310 can provide a plurality of fonts 507 that can be applied to the designated text information 500 of the first portion 305. Those of ordinary skill in the art will appreciate that other input data can be received at the first electronic device 100 and processed to modify the second portion 310 of the shared user interface 300. Those of ordinary skill in the art will also appreciate that the modifications to the second portion 310 can vary depending on the type of input data received and the application running on the first electronic device 100. While Figure 5 illustrates that input data received at the first electronic device 100 can modify both the first portion 305 and the second portion 310 of the shared user interface 300, those of ordinary skill in the art will appreciate the input data received at the first electronic device 100 can modify one of the first portion 305 and the second portion 310 of the shared user interface 300.

Input Data Entered at Both the First Electronic Device and the Second Electronic Device

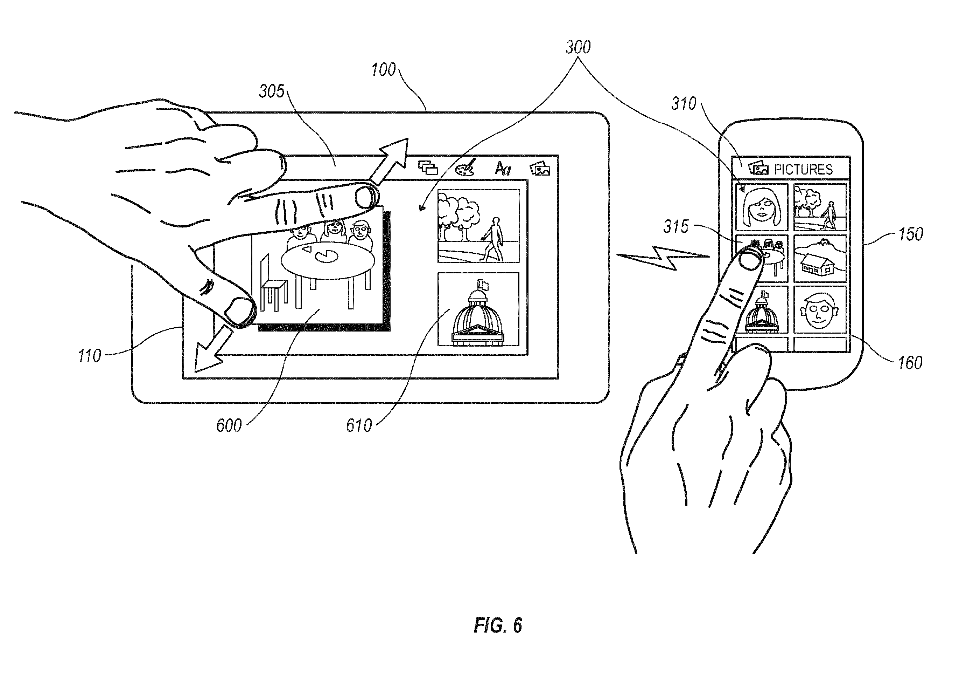

Figure 6 is an exemplary system for providing a shared user interface comprising a first electronic device 100 on which a first portion 305 of the shared user interface 300 is displayed and a second electronic device 150 on which a second portion 310 of the shared user interface 300 is displayed, similar to that illustrated in Figures 3-5. Figure 6 illustrates the modification of the first portion 305 of the shared user interface 300 based on input data corresponding to an input entered at both the first electronic device 10 0and the second electronic device 150. For example, the input entered can be a chorded input such as an input entered simultaneously at the first electronic device 100 and the second electronic device 150 or an input entered at the first electronic device 100 and the second electronic device 150 according to a specified sequence. For example, chorded inputs can include simultaneous long tapping inputs entered simultaneously at the first electronic device 100 and the second electronic device 150, a long tap entered at the second electronic device 150 simultaneously with a swiping gesture entered at the first electronic device 100, a short tape entered at the second electronic device 150 followed by a pinching gesture entered at the first electronic device 100, or other similar chorded inputs. The chorded input can comprise any number of inputs, as long as there are at least two simultaneously or sequentially entered inputs.

In Figure 6, the display 110 of the first electronic device 100 and the display 160 of the second electronic device 150 are integrated with input interfaces, such as touchscreens. In Figure 6, the application 320 running on the first electronic device 100 can be a presentation design application. The first portion 305 of the shared user interface 300 can be a virtual workspace associated with the presentation design application 320, and the second portion 310 can be a content display similar to the picture picker or picture selector illustrated in Figures 3 and 4.

In Figure 6, a presentation-in-progress is provided in the virtual workspace of the first portion 305 of the shared user interface 300. The presentation-in-progress of the first portion 305 illustrated in Figure 6 includes two digital images 610. Figure 6 illustrates a chorded input comprising a first input entered at the display 160 of the second electronic device 150 and a simultaneously entered second input entered at the display 110 of the first electronic device 100. In Figure 6, the first input entered at the second electronic device 150 can be a tapping gesture. The second input entered at the first electronic device 100 can be an expanding gesture. As illustrated in Figure 6, the first input and the second input can be associated with input data. The input data corresponding to the first input and the second input can be transmitted, for example, by the output devices 135, 170 (shown in Figure 1) to the first electronic device 100. In other example, the input data can be transmitted to and processed by the processor 105, 155 of one or both of the first electronic device 100 and the second electronic device 150 or to a remote processor coupled to one or both of the first electronic device 100 and the second electronic device 150. The processor 105, 155 of one or both of the first electronic device 100 and the second electronic device 150 or a remote processor coupled to one or both of the first electronic device 100 and the second electronic device 150 can transmit instructions or a request to modify one or both of the first portion 305 and the second portion 310 of the shared user input based on the received input data which is associated with the chorded input comprising the first input and second input. For example, as illustrated in Figure 6, the received input data can modify the first portion 305.

In Figure 6, the first input of the chorded input can indicate a designation of a new digital picture 600 represented by a thumbnail 315 provided in the second portion 310 of the shared user interface. The second input of the chorded input can indicate a location and an enlargement of new digital picture 600 corresponding to the designated thumbnail 315 provided in the second portion 310. In response to the received input data corresponding to the first and second input, the first portion 305 of the shared user input 300 can be modified such that the digital picture 600 associated with the designated thumbnail 315 is added to the presentation-in-progress provided in the first portion 305 at a location corresponding to the location on the surface of the display 110 where the second input (that is, the expanding gesture) was entered. The first portion 305 can further be modified to illustrated or animate an enlargement of the digital picture 600, where the size of the image is enlarged relative to the size of the expanding gesture of the second input, the length of time the expanding gesture was detected, or the last locations on the surface of the display 110 where the second input was detected. Those of ordinary skill in the art will appreciate that other chorded inputs can be received and processed to modify one or both of the first portion 305 and the second portion 310 of the shared user interface 300. Those of ordinary skill in the art will also appreciate that the modifications to the first portion 305 and/or second portion 310 can vary depending on the type of chorded input received and the application running on the first electronic device 100. Those of ordinary skill in the art will appreciate that such chorded inputs can enhance the functionality of the application by enhancing the user-intuitiveness of the shared user interface 300 and enhancing or increasing the functionality of the shared user interface 300.

Positional and Orientation Data of the First Electronic Device and Second Electronic Device

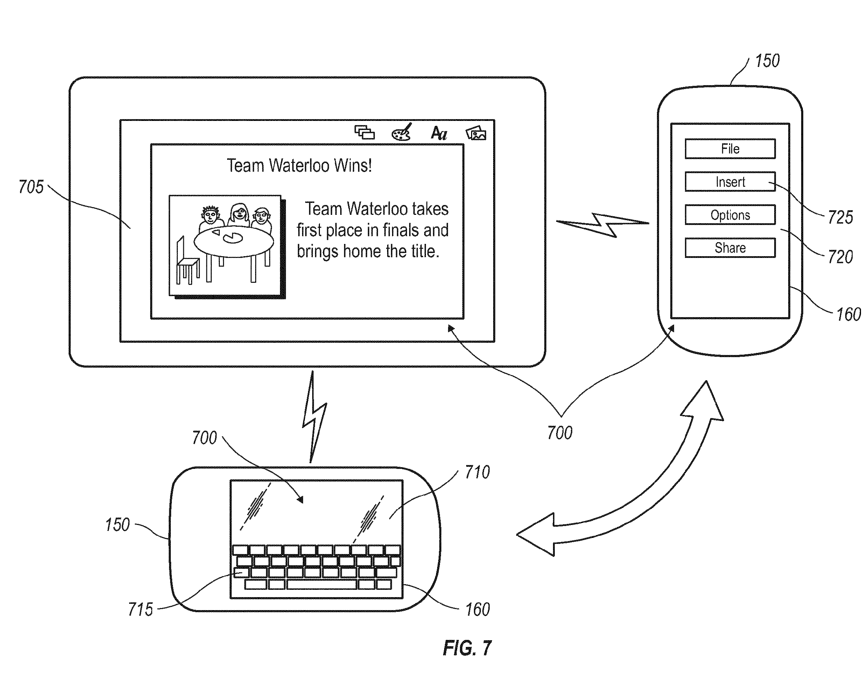

Figure 7 is an exemplary system for providing a shared user interface comprising a first electronic device 100 on which a first portion 705 of the shared user interface 700 is displayed and a second electronic device 150 on which a second portion 710, 720 of the shared user interface 700 is displayed, similar to that illustrated in Figures 3-6. Figure 7 illustrates that the positions of the first electronic device 100 and the second electronic device 150 relative to one another can determine what is provided in the first portion 705 and the second portion 710, 720 of the shared user interface 700. In Figure 7, the position of the second electronic device 150 relative to the first electronic device 100 can be determined. This determination can be made by the processor 105, 155 of one or both of the first electronic device 100 and the second electronic device 150, one or more remote processors coupled to one or both of the first electronic device 100 and the second electronic device 150, or a combination thereof. In Figure 7, the processor 105 of the first electronic device 100 can determine the location of the second electronic device 150 relative to the first electronic device 100 based on data received by the paired device detector 120 (shown in Figure 1) of the first electronic device 100. For example, the paired device detector 120 can be an NFC reader embedded in the first electronic device 100. The second electronic device 150 can include an NFC tag embedded therein and readable or detectable by the paired device detector 120. The paired device detector 120 can detect the NFC tag of the second electronic device 150 and determine the relative position of the second electronic device 150 with respect to the location of the paired device detector 120 in the first electronic device 100. In other embodiments, the paired device detector 120 can be embedded radio frequency identification tags and readers, infrared emitters and sensors, subsonic emitters and sensors, gyro sensors, gravitometers, motion sensors, embedded cameras, e-field sensors (such as electric field sensors), magnets, magnetometers, or other proximity-sensing devices and technology.

The location detected by the paired device detector 120 can be transmitted to and received by the processor 105, 155 of one or both of the first electronic device 100 and the second electronic device 150, one or more remote processors coupled to one or both of the first electronic device 100 and the second electronic device 150, or any combination thereof. The second portion 710, 720 of the shared user interface 700 then can be generated based at least in part on the determined position of the second electronic device 150 and the application 320 running on the first electronic device 100. The processor 105 of the first electronic device 100 then can execute instructions can then be executed or transmit to execute instructions to the processor 155 of the second electronic device 150 to display the generated second portion 710, 720 of the shared user interface 700 that is based at least in part on the determined position of the second electronic device 150 with respect to the first electronic device 100.

In Figure 7, the first electronic device 100 is an electronic tablet on which an application is running. In Figure 7, the application is a presentation design application, similar to those illustrated in Figures 3-6. As illustrated in Figure 7, the first portion 705 of the shared user interface 700 includes a virtual workspace on which a presentation can be designed. For example, in Figure 7, a presentation-in-progress is provided in the virtual workspace of the first portion 705. The presentation-in-progress of the first portion 705 includes a title, a digital picture, and text information. The second electronic device 150 can be detected and a determination can be made as to the location of the second electronic device 150 with respect to the first electronic device 100. For example, in Figure 2, the second electronic device 150 can be detected and determined as being located adjacent a bottom side the first electronic device 100. In response to the detected and determined position of the second electronic device 150, a second portion 710 of the shared user interface 700 can be generated based at least in part on the determined position of the second electronic device 150. For example, as illustrated in Figure 7, the second portion 710 can include a virtual keyboard 715 based on the second electronic device 150 being positioned adjacent a bottom side the first electronic device 100. The virtual keyboard 715 can be utilized to add, edit, or modify text information provided in the virtual workspace (for example in a presentation-in-progress) of the first portion 705.

Also illustrated in Figure 7, if the second electronic device 150 is moved from being adjacent the bottom side the first electronic device 100 to being adjacent a lateral side of the first electronic device 100, the paired device detector 120 of the first electronic device 100 can detect the change in location of the second electronic device 150 and transmit data to the processor 105, 155 of one or both of the first electronic device 100 and the second electronic device 150, one or more remote processors coupled to one or both of the first electronic device 100 and the second electronic device 150, or any combination thereof. The processor 105, 155 of one or both of the first electronic device 100 and the second electronic device 150, one or more remote processors coupled to one or both of the first electronic device 100 and the second electronic device 150, or any combination thereof then can modify the second portion 710 to display a new second portion 720 based on the new, changed, or second position of the second electronic device 150 relative to the first electronic device 100. In Figure 7 where the application running on the first electronic device 100 is a presentation design application and the position of the second electronic device 150 is adjacent a lateral side of the first electronic device 100, the generated modified or new second portion 720 can be a tool bar. For example, the tool bar of the modified or new second portion 720 can include one or more selectable graphical items 725. In Figure 7, the selectable graphical items 725 can include a "file" item, an "insert" item, an "options" item, and a "share" item. Those of ordinary skill in the art will appreciate that the second electronic device 150 can be positioned at any other location with respect to the first electronic device 100. Those of ordinary skill in the art will also appreciate that the second portion 710 of the shared user interface 700 can vary from what is illustrated in Figure 7 depending on: the determined position of the second electronic device 150 relative to the first electronic device 100, depending on the application running on the first electronic device 100, and/or depending on selections or designations made in the first portion 705 of the shared user interface prior to or during a determination of the position of the second electronic device 150 relative to the first electronic device 100. Those of ordinary skill in the art will also appreciate that the relative positions of the first electronic device 100 and the second electronic device 150 can determine what is generated for, updated in, and provided in the first portion 710 of the shared user interface 700. As will be appreciated by those of ordinary skill, the ability to control what is provided in the first portion 705 and the second portion 710, 720 of the shared user interface 700 can enhance the functionality of the application while minimizing the number of input interfaces needed to utilize the application and while still maximizing the amount of workspace provided on the first electronic device 100 or the primary device.

In another embodiment, the orientation of the first electronic device 100 and/or the second electronic device 150 can modify the shared user interface 700. For example, in Figure 7, if the first electronic device 100 is oriented in a landscape orientation and the second electronic device 150 is located adjacent a bottom side of the first electronic device 100, the second portion 710 of the shared user interface 700 can comprise a virtual keyboard 715. If the orientation of the first electronic device 100 is changed from a landscape orientation to a portrait orientation and the second electronic device remains located adjacent the bottom side of the electronic device, the second portion 710 of the shared user interface 700 can be modified to comprise a tool bar, a menu bar, or a task bar (not shown). If the second electronic device 150 is then moved from being adjacent a bottom side of the first electronic device 100 to being adjacent a lateral side of the first electronic device 100, the second portion 710 of the shared user interface can be modified to comprise the menu of one or more selectable graphical items 725, as illustrated in Figure 7. Similarly, the orientation of the second electronic device 150 can modify the can modify the shared user interface 700. Those of ordinary skill in the art will appreciate that the orientation of the first electronic device 100 and the second electronic device 150 can be determined by: one or both of the processor 105 of the first electronic device 100 and the processor 155 of the second electronic device, one or more remote processors communicatively coupled to the first electronic device 100 and the second electronic device 150, gyro sensors, gravitometers, motion sensors, or other position-sensing sensors coupled to one or both of the first electronic device 100 and the second electronic device 150.

While Figures 4-7 have been described in relation to an application that is a presentation design application, those of ordinary skill in the art will appreciate that the application running on the first electronic device 100 can be a word-processing application. The shared user interface 300 generated based on the device pairing and the word-processing application can include a first portion 305 that includes a virtual workspace or a virtual piece of paper displayed on the first electronic device 100. The shared user interface 300 can also include a second portion 310 that includes a menu bar comprising one or more menus including designatable, selectable, actionable, or otherwise actuable options or items for composing a word-processing document. The second portion 310 of a shared user interface 300 for a word-processing application can be a file menu comprising one or more graphical items representing document files. An input can be entered via an input interface 165 (shown in Figure 1) of the second electronic device 150. The input can correspond to a designation or a selection of a graphical item representing a document file. Input data corresponding to the designated the graphical item representing the document file can be transmitted from the second electronic device 150 to the first electronic device 100. The first portion 305 of the shared user interface 300 can be modified based on the input data corresponding to the designation of the graphical item representing the document file from the second portion 310. For example, the first portion 305 can be modified to display the document file corresponding to the designated graphical item representing the file provided in the second portion 310.

Pop-up Information

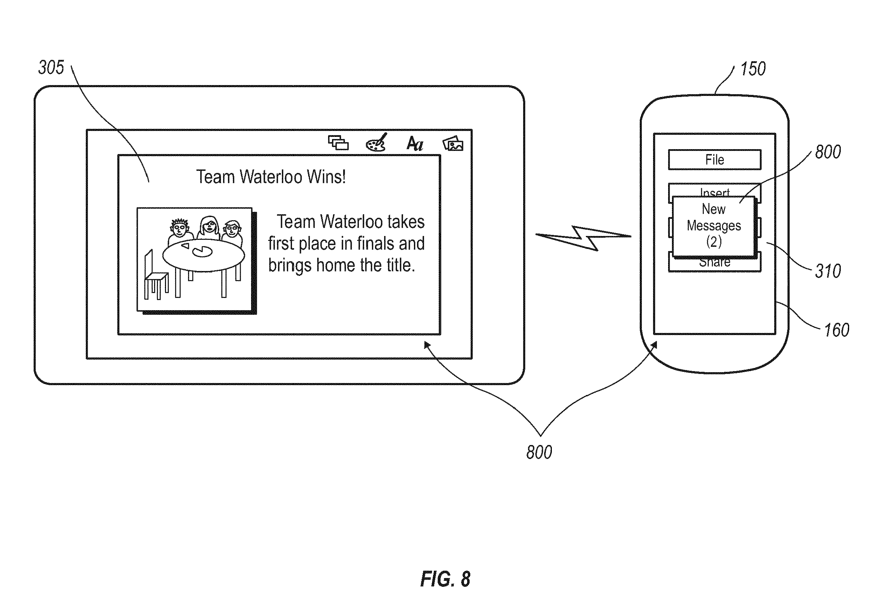

Figure 8 is an exemplary system for providing a shared user interface comprising a first electronic device 100 on which a first portion 305 of the shared user interface 300 is displayed and a second electronic device 150 on which a second portion 310 of the shared user interface 300 is displayed, similar to that illustrated in Figures 3-6. Figure 8 illustrates that pop-up information received while an application is running and being utilized as a primary application can be transferred and opened on a second portion 310 of the shared user interface 300, thereby minimizing the amount of disruptions or distractions at the first portion 305 of the shared user interface 300. Pop-up information can include pop-up notifications, pop-up messages, notifications indicating an incoming message, pop-up windows, semitransparent windows displayed over primary or currently utilized application windows, instant communication message windows, calendar notifications, meeting reminders, alarm notifications, graphical menus, email messages, low-power warnings, software or application update notifications, or other graphical information which can at least partially obstruct a currently application window or application graphical user input (GUI) interface.

In the particular example illustrated in Figure 8, a presentation design application is running on the first electronic device 100. The first portion 305 of the shared user interface 300 can be a virtual workspace for the presentation design application. The second portion 310 can be a tool bar comprising selectable or designatable actions associated with designing a virtual presentation. A pop-up window 800 alerting the user that two new messages (for example, email messages, voicemail messages, text messages, instant communication messages, or other messages) have been received. In Figure 8, the pop-up window 800 can be provided automatically in the second portion 310 of the shared user interface, thereby avoiding obstruction of the first portion 305 which includes the primary display of the presentation design application. For example, the virtual workspace of the first portion 305 on which presentations can be designed. The automatic display of the pop-up window 800 can be embedded in the application frame work when the second portion 310 is generated. As illustrated in Figure 8, the pop-up window 800 can be overlaid on a menu bar provided in the second portion 310. The pop-up window 800 can be an opaque notification or a semitransparent notification.

In another example, the pop-up window 800 can be a selectable notification, such that an input can be entered to open the pop-up window 800 to modify one or both of the first portion 305 and the second portion 310 of the shared user interface. For example, the pop-up window 800 can be selected to open the pop-up window 800, and the second portion 310 of the shared user interface 300 can be modified such that the tool bar of the second portion 310 is minimized or hidden from view, and the messages associated with the pop-up window 800 as displayed.

In another embodiment, the pop-up window 800 can be displayed on the first portion 305 of the shared user interface 300. However, instead of opening the pop-up window 800 at the first portion 305 a transfer input can be received. For example, the transfer input can be indicative of a request to move the pop-up window 800 to the second portion 310 of the shared user interface and/or a request to open the pop-up window 800 at the second portion 310. The transfer input can include a gesture input entered at the input interface of the first electronic device (for example, a gesture input entered at the surface of a touchscreen), an actuation of a key or physical key provided on the first electronic device 100, or any other input entered at the first electronic device that is indicative of a request to transfer the pop-up window 800 from the first portion 305 to the second portion 310 of the shared user interface 300. For example, the transfer input can be a gesture input that is a sweeping gesture made across the first portion 305 of the shared user interface 300 toward the second portion 310 of the shared user interface 300. Such a gesture input can correspond to a modification of the first portion 305 and the second portion 310 to include an animation of the pop-up window 800 being swept from the first portion 305 to the second portion 310 of the shared user interface 300.

In another example, the transfer input can be a contact input between the first electronic device 100 and the second electronic device 150. For example, the contact input can be a physical tap input made between the first electronic device 100 and the second electronic device 150. Such a tap input can be a physical tapping of the second electronic device 150 against the first electronic device 100, or vice versa. For example, one corner of the second electronic device 150 can be tapped against a corner of the first electronic device 100. Such a contact input can correspond to a modification of the first portion 305 and the second portion 310 to include an animation of the pop-up window 800 disappearing from the first portion 305 and reappearing on the second portion 310 of the shared user interface 300 when the second electronic device 150 and the first electronic device 100 are separated by a predetermined distance. In other examples, the contact input can be a bumping input where a portion of second electronic device 150 can physically bump the first electronic device 100 to transfer the pop-up window 800 from the first portion 305 to the second portion 310 of the shared user interface 300. The contact inputs described in relation to Figure 8 need not require physical contact between the first electronic device 100 and the second electronic device 150 but can instead be a detection of a predetermined proximity or predetermined distance therebetween that is indicative of a contact input. Contact inputs can be determined and received using embedded NFC tags and readers, can be embedded radio frequency identification tags and readers, infrared emitters and sensors, subsonic emitters and sensors, gyro sensors, gravitometers, motion sensors, embedded cameras, e-field sensors (such as electric field sensors), magnets, magnetometers, or other proximity-sensing devices and technology. With the system and method of providing a shared user interface as described herein, the interruption to workflow and distractions typically associated with pop-up information can be reduced.

As illustrated in Figures 3-8 of the present disclosure, the described system, apparatuses, and method of providing a shared user interface can enhance the functionality and user-friendliness of applications run on electronic devices, such as mobile devices and handheld devices, which can sometimes have limited available virtual workspace on their displays. By providing a shared user interface that can be shared between a primary device (first electronic device, such as an electronic tablet) and a secondary device (second electronic device, such as a smartphone), the primary device can provide a sufficiently large virtual workspace as compared to non-shared user interfaces while tool bars, content displays, menu bars, and other information and content secondary to the virtual workspace can be provided on the secondary device.

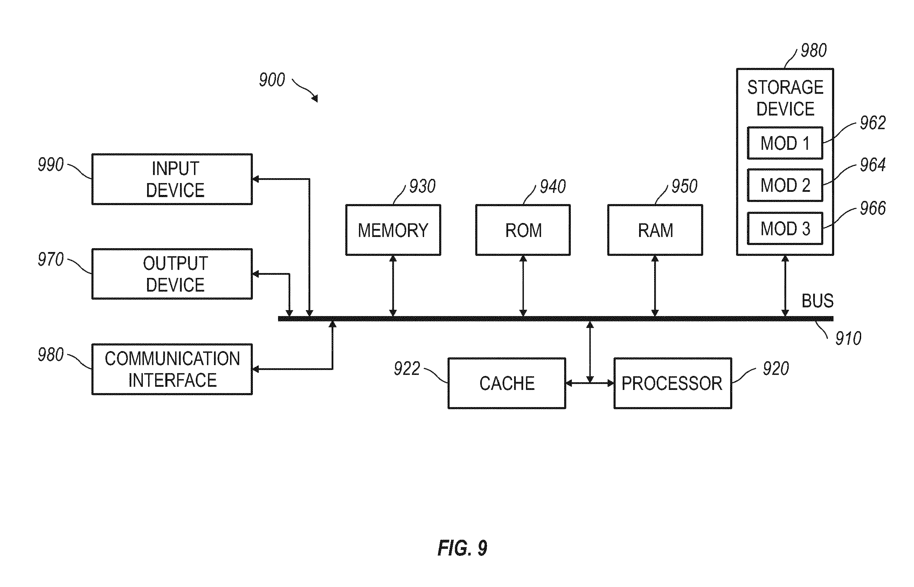

The disclosure now turns to a brief description of a basic general purpose system or computing device, as shown in Figure 9, which can be employed to practice the concepts is disclosed herein. The components disclosed herein can be incorporated in whole or in part into handsets, transmitters, servers, and/or any other electronic or other computing device.

With reference to Figure 9, an exemplary system 900 includes a general-purpose computing device 900 or electronic device, including a processing unit (CPU or processor) 920 and a system bus 910 that couples various system components including the system memory 930 such as read only memory (ROM) 940 and random access memory (RAM) 950 to the processor 920. The system 900 can include a cache 922 of high speed memory connected directly with, in close proximity to, or integrated as part of the processor 920. The system 900 copies data from the memory 930 and/or the storage device 960 to the cache 922 for quick access by the processor 920. In this way, the cache provides a performance boost that avoids processor 920 delays while waiting for data. These and other modules can control or be configured to control the processor 920 to perform various actions. Other system memory 930 may be available for use as well. The memory 930 can include multiple different types of memory with different performance characteristics. It can be appreciated that the disclosure may operate on a computing device 900 with more than one processor 920 or on a group or cluster of computing devices networked together to provide greater processing capability. The processor 920 can include any general purpose processor and a hardware module or software module, such as module 4 962, module 2 964, and module 3 966 stored in storage device 960, configured to control the processor 920 as well as a special-purpose processor where software instructions are incorporated into the actual processor design. The processor 920 may essentially be a completely self-contained computing system, containing multiple cores or processors, a bus, memory controller, cache, etc. A multi-core processor may be symmetric or asymmetric.

The system bus 910 may be any of several types of bus structures including a memory bus or memory controller, a peripheral bus, and a local bus using any of a variety of bus architectures. A basic input/output system (BIOS) stored in ROM 940 or the like, may provide the basic routine that helps to transfer information between elements within the computing device 900, such as during start-up. The computing device 900 further includes storage devices 960 such as a hard disk drive, a magnetic disk drive, an optical disk drive, tape drive or the like. The storage device 960 can include software modules 962, 964, 966 for controlling the processor 920. Other hardware or software modules are contemplated. The storage device 960 is connected to the system bus 910 by a drive interface. The drives and the associated computer readable storage media provide nonvolatile storage of computer readable instructions, data structures, program modules and other data for the computing device 900. In one aspect, a hardware module that performs a particular function includes the software component stored in a non-transitory computer-readable medium in connection with the necessary hardware components, such as the processor 920, bus 910, display 970, and so forth, to carry out the function. The basic components are known to those of skill in the art and appropriate variations are contemplated depending on the type of device, such as whether the device 900 is a small, handheld computing device, a desktop computer, or a computer server.

Although the example described herein employs the hard disk 960, it should be appreciated by those skilled in the art that other types of computer readable media which can store data that are accessible by a computer, such as magnetic cassettes, flash memory cards, digital versatile disks, cartridges, random access memories (RAMs) 950, read only memory (ROM) 940, a cable or wireless signal containing a bit stream and the like, may also be used in the exemplary operating environment. Non-transitory computer-readable storage media expressly exclude media such as energy, carrier signals, electromagnetic waves, and signals per se.

To enable user interaction with the computing device 900, an input device 990 represents any number of input mechanisms, such as a microphone for speech, a touch-sensitive screen for gesture or graphical input, keyboard, mouse, motion input, speech and so forth. An output device 970 can also be one or more of a number of output mechanisms known to those of skill in the art. In some instances, multimodal systems enable a user to provide multiple types of input to communicate with the computing device9 00. The communications interface 980 generally governs and manages the user input and system output. There is no restriction on operating on any particular hardware arrangement and therefore the basic features here may easily be substituted for improved hardware or firmware arrangements as they are developed.

For clarity of explanation, the illustrative system example is presented as including individual functional blocks including functional blocks labeled as a "processor" or processor 920. The functions these blocks represent may be provided through the use of either shared or dedicated hardware, including, but not limited to, hardware capable of executing software and hardware, such as a processor 920, that is purpose-built to operate as an equivalent to software executing on a general purpose processor. For example the functions of one or more processors presented in Figure 9 may be provided by a single shared processor or multiple processors. (Use of the term "processor" should not be construed to refer exclusively to hardware capable of executing software.) Illustrative examples may include microprocessor and/or digital signal processor (DSP) hardware, read-only memory (ROM) 940 for storing software performing the operations discussed below, and random access memory (RAM) 950 for storing results. Very large scale integration (VLSI) hardware examples, as well as custom VLSI circuitry in combination with a general purpose DSP circuit, may also be provided.

The logical operations of the various examples are implemented as: (1) a sequence of computer implemented steps, operations, or procedures running on a programmable circuit within a general use computer, (2) a sequence of computer implemented steps, operations, or procedures running on a specific-use programmable circuit; and/or (3) interconnected machine modules or program engines within the programmable circuits. The system 900 shown in Figure 9 can practice all or part of the recited methods, can be a part of the recited systems, and/or can operate according to instructions in the recited non-transitory computer-readable storage media. Such logical operations can be implemented as modules configured to control the processor 920 to perform particular functions according to the programming of the module. For example, Figure 9 illustrates three modules Mod 1 962, Mod 2 964 and Mod 3 966 which are modules configured to control the processor 920. These modules may be stored on the storage device 960 and loaded into RAM 950 or memory 930 at runtime or may be stored as would be known in the art in other computer-readable memory locations.

Examples within the scope of the present disclosure may also include tangible and/or non-transitory computer-readable storage media for carrying or having computer-executable instructions or data structures stored thereon. Such non-transitory computer-readable storage media can be any available media that can be accessed by a general purpose or special purpose computer, including the functional design of any special purpose processor as discussed above. By way of example, and not limitation, such non-transitory computer-readable media can include RAM, ROM, EEPROM, CD-ROM or other optical disk storage, magnetic disk storage or other magnetic storage devices, or any other medium which can be used to carry or store desired program code means in the form of computer-executable instructions, data structures, or processor chip design. When information is transferred or provided over a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable media.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, components, data structures, objects, and the functions inherent in the design of special-purpose processors, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those of skill in the art will appreciate that other examples of the disclosure may be practiced in network computing environments with many types of computer system configurations, including personal computers, hand-held devices, multi-processor systems, microprocessor-based or programmable consumer electronics, network PCs, minicomputers, mainframe computers, and the like. Examples may also be practiced in distributed computing environments where tasks are performed by local and remote processing devices that are linked (either by hardwired links, wireless links, or by a combination thereof) through a communications network. In a distributed computing environment, program modules may be located in both local and remote memory storage devices.

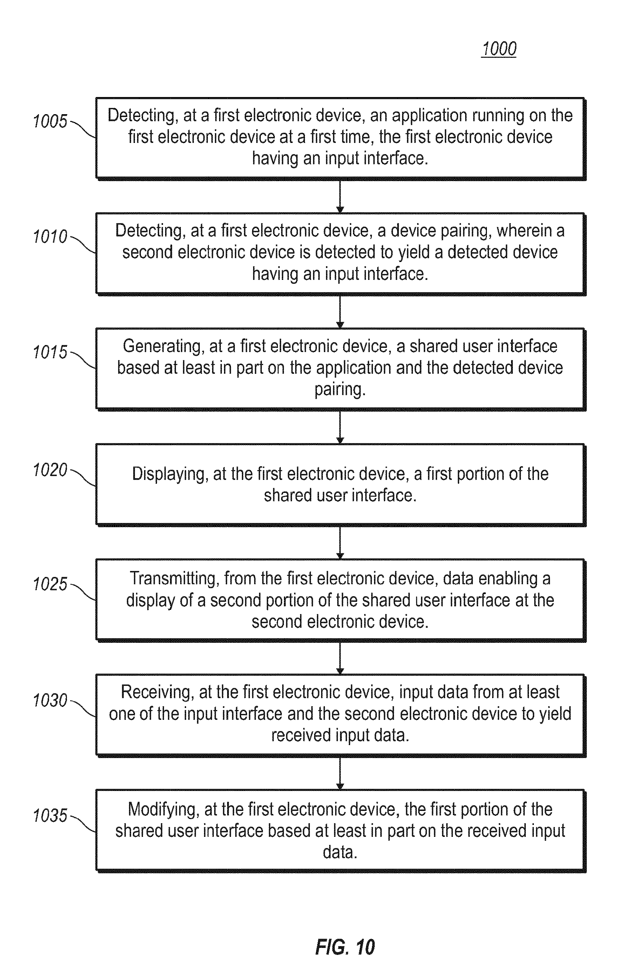

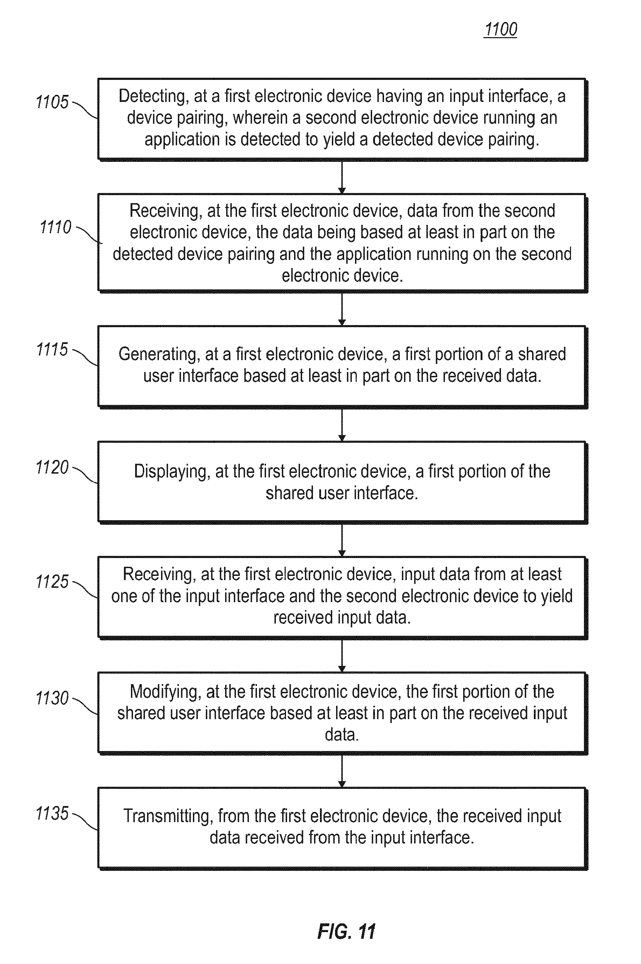

The disclosure now turns to a general description of the method for providing a shared user interface from the perspective of a primary electronic device (Figure 10) and from the perspective of a secondary electronic device (Figure 11).

Figure 10 is a flow chart of the method 1000 of providing a shared user interface, described in detail above, from the perspective of the first electronic device that is a primary device (for example, an electronic tablet). The method 1000 beginning at block 1005 comprises detecting, at a first electronic device, an application running on the first electronic device at a first time, the first electronic device having an input interface. The method 1000 proceeding to block 1010 comprises detecting , at the first electronic device, a device pairing, wherein a second electronic device is detected to yield a detected device pairing. In response to the detected device pairing, the method 1000 proceeds to block 1015 where the shared user interface is generated, at the first electronic device, based at least in part on the application and the detected device pairing. The method can proceed to block 1020 where the shared user interface can be displayed. For example, at block 1020, at the first electronic device, a first portion of the shared user interface is displayed. At block 1025, data enabling a display of a second portion of the shared user interface can be transmitted to the second electronic device. Input data can be detected at block 1030. For example, at block 1030, input data can be received, at the first electronic device, from at least one of the input interface and the second electronic device to yield a received input data. In response to the received input data, the method can proceed to block 1035. At block 1035, the first portion of the shared user interface can be modified, at the first electronic device, the first based at least in part on the received input data.

Figure 11 is a flow chart of the method 1100 of providing a shared user interface, described in detail above, from the perspective of a first electronic device that is a secondary device (for example, a smartphone). The method 1100 can begin at block 1105 where a detection of a device pairing is made, at a first electronic device having an input interface, a device pairing, to yield a detected device pairing. The method 1100 can proceed to block 1110 where data from a second electronic device (for example, an electronic tablet), can be received at the first electronic device. The received data can be based at least in part on the detected device pairing and the application running on the second electronic device and can enable the display of at least a portion of a shared user interface. In response to the received data, the method 1100 can proceed to block 1115. At block 1115, a first portion of the shared user interface can be generated, at the first electronic device, based at least in part on the received data. In response to generating the first portion of the shared user interface, the method 1100 can proceed to block 1120. At block 1120, the first portion of the shared user interface can be displayed, at the first electronic device. Input data can be detected by the first electronic device. For example, at block 1125, input data can be received, at the first electronic device, from at least one of the input interface and the second electronic device to yield a received input data. In response to the received input data, the method 1100 can proceed to block 1130. At block 1130, the first portion of the shared user interface can be modified, at the first electronic device, based at least in part on the received input data. The method 1100 can proceed to block 1135 where the received input data can be transmitted to the second electronic device. The transmitted input data can enable the second electronic device to modify a second portion of the shared user interface displayed at the second electronic device.

Example User Interface (UI) Framework

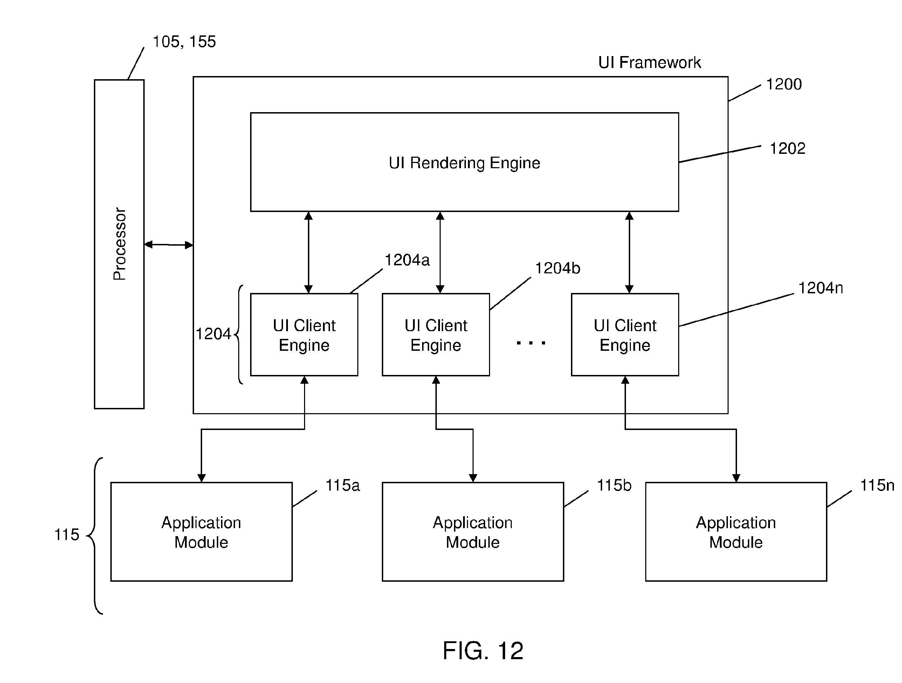

It can be appreciated that the principles discussed herein may be implemented by a user interface (UI) framework 1200 on the first and second electronic devices 100, 150. As illustrated in Figures 12 to 14, the UI framework 1200 may be provided for handling UI operations and decisions on behalf of at least one application module 115. As shown in Figure 12, the UI framework 1200 may support multiple applications 115. The UI framework 1200 operates according to application logic to obtain or otherwise handle UI elements for the applications 115 and render those UI elements on the display screens 110, 160. Although not shown in Figure 12, the UI frameworks 1200 may also communicate via respective network interfaces, e.g., when pairing over a mobile network.

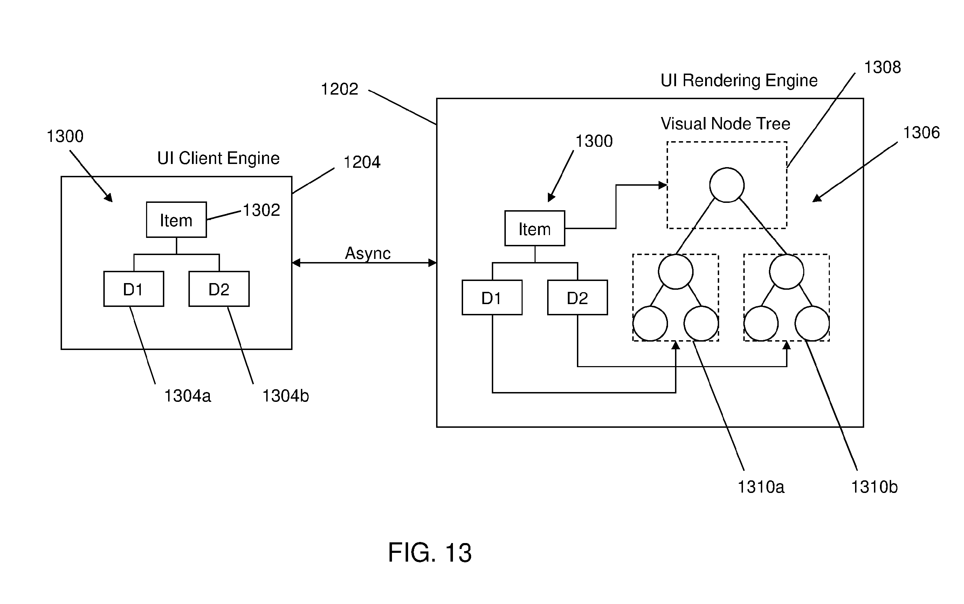

Further detail regarding a configuration for the UI framework 1200 will now be described, making reference to Figures 12 and 13.

UIs may be generally visualized as a graphical scene comprising elements or objects (also referred to as entities). Data structures known as scene graphs may be used to define the logical and/or spatial representation of a graphical scene. A scene graph is a collection of nodes in a graph or tree structure. The elements or objects of a UI may be represented as nodes in the scene graph. A node in a scene graph may have many children. The parent node of a scene graph that does not itself have a parent node corresponds to the overall UI.

Consequently, an effect applied to a parent is applied to all its child nodes, i.e., an operation performed on the parent of a group (related by a common parent) automatically propagates to all of its child nodes. For example, related objects/entities may be grouped into a compound object (also known as a layout), which may by moved, transformed, selected, etc., as a single group. In general, a layout can be any grouping of UI elements or objects. The term "container" as used herein refers to layouts that group UI elements in a particular ordered manner. A parent node can have one or more child nodes that can be, for example, any type of layout including a container. Each container can in turn have its own child nodes, which may be, for example, other container nodes, basic UI elements or special effect nodes. The basic UI elements correspond to discrete components of the UI such as, for example, a button or a slider. A leaf node in a scene graph corresponds to a basic UI element. A leaf node does not have any child nodes.

As mentioned above, containers are layouts that group interface elements in a particular ordered manner. Containers can be of various types, including but not limited to, docking containers, stacking containers, grid-based containers, and scrolling containers.

The UI framework 1200 shown in Figure 12 differs from conventional UIs that are developed for individual applications by the application developers with limited or no consistency between the UIs for different applications. For example, in conventional systems, an application is responsible for driving its UI. The application creates the UI elements, composites them into a complete UI screen and is responsible for displaying them. The actual rendering is often handled by the UI framework (e.g., calling the draw function for all widgets on the screen), but most of the code related to the UI is within the application. It is the responsibility of the application to collect the requisite data for each UI and to populate the UI. The data flow in the system is therefore driven by the applications, leading to a large amount of UI-related code in the application that is both difficult to maintain and customize.

The UI framework 1200 herein described is independent of device platform (e.g., independent of mobile device architecture and operating system) as well as application framework (e.g., independent of application programming language). The UI framework 1200 described herein provides scalability, improved graphical capabilities and ease of customization, and results in enhanced user experiences. The UI framework 1200 is used by applications 115 to render their UIs. The UI framework 1200 is itself not an application framework (i.e., is not used for developing applications) and does not impose any rules on application structuring or application management. The UI framework 1200 does not provide application functionality. The applications 115 themselves implement the functionality (or business logic) behind the UI. However, using the UI framework 1200 removes all UI call functionalities from the application code and instead lets the UI control data call functions. Thus, a the UI can interact with multiple applications for data requests in a seamless manner. The single UI framework 1200 described herein enforces a clear separation between UI visualization, UI logic, and UI data thereby allowing the creation of a seamless and truly rich UI. The applications 115 are reduced to simple services, responsible for performing business logic and provide the data that the UI requests. An advantage of the single UI framework 1200 is that it allows that UI designer to create any user scenario without having to account for the applications 115 that are currently running on the electronic device 100, 150 or whether or not multiple display screens 110, 160 are available for displaying UI elements. That is, the UI is driving the data flow. If there is a list on the screen displaying contacts, there will be requests for data to a Contacts List application. The UI designer can readily use any application 115 available on the electronic device 100 for its UI without having to specifically create or implement UI elements and populate the lists. Consequently, the architecture of the UI framework 1200 described herein enables seamless cross application scenarios such as the examples described above.

The UI framework 1200 shown in Figure 12 comprises multiple modules or engines: typically, a single UI rendering engine 1202 for a device 100 or a display 110; and separate UI client engines 1204a, 1204b, .... 1204n associated with separate applications 115a, 115b, and 115n respectively. Each of these modules 1202, 1204 is described in further detail below with reference to Figure 13.

Each UI client engine 1204 is responsible for providing UI data from its associated application 115 to the UI rendering engine 1202. The UI client engine 1204 is responsible for setting up UI component trees 1300 and informing the UI rendering engine 1202 of the tree structure 44. In the example shown in FIG 6 the UI component tree 1300 includes an item 1302 as a parent node, with two data items 1304a, 1304b as child nodes. The UI client engine 1204 gets this information from the application 115. For example, the application code could specify the creation of elements, such as buttons and containers, programmatically in a language such as C++, or the application could describe the tree in a declarative language, such as XML, and have the UI client engine load it. The UI rendering engine 1202 mirrors the tree 1300 set up by UI client engine 1204 to create a mirrored tree 44. The UI rendering engine 1202 sets up visual node trees 1308, 1310a, and 1310b for each UI element 1302, 1304a, 1304b of the UI component tree 1300. To set up the visual node trees 1306, the UI rendering engine 1202 has predefined visual node trees 1306 for each UI component that the UI client engine 1204 provides. For example if the UI client engine 1204 sets up a Button, the UI rendering engine 1202 will have a predefined visual node tree 1306 for Button which it will use. Typically, this predefined visual node tree 1306 will be described in a mark-up language, such as XML, but it could also be described in programmatic code, such as an API. The visual node trees 1306 are used for rendering the elements (for example the background, foreground and highlight images of a button are represented in the visual node tree 1306). The UI client engine 1204 is not aware of the visual node trees.

The UI rendering engine 1202 handles the logic and event handling associated with the UI elements that composite the UI (e.g., lists, menus, softkeys, etc.). The UI rendering engine 1202 receives data from the UI client engine 1204 in an asynchronous manner, and binds the data to its visual nodes in the visual tree 1306. As used herein "asynchronous" means that the transmission of data from the UI client engine 1204 to the UI rendering engine 1202 is independent of processing of data, or inputs, by the application 115. All data that can be presented in the UI for processing as a single thread is made available to the UI rendering engine 1202 as it is available to the UI client engine 1204. The underlying application processing and data sources behind the UI client engine 1204 are hidden from the UI rendering engine 1202. The UI client engine 1204 and UI rendering engine 1202 can execute separate threads without waiting for responses from each other. In this manner, the UI rendering engine 1202 can render the UI tree 1300 (using the visual node tree 1306) without being blocked or stalled by UI client engine 1204.

Since the UI client engine 1204 sends data to the UI rendering engine 1202 as it becomes available, the UI client engine 1204 should also indicate to the UI rendering engine 1202 whether the data is complete, or to await further data prior to rendering. In an example implementation, the data items necessary for rendering the UI form a "transaction." Rather than waiting until all required data items are available, the UI client engine 1204 can send data items relating to a single transaction in several communications or messages as they become available, and the messages will be received asynchronously by the UI rendering engine 1202. The UI rendering engine 1202 does not start processing the received data items until it has received all messages that at are part of the transaction.

For example, the UI client engine 1204 can inform the UI rendering engine 1202 that one container with two child buttons has been created as one transaction. The UI rendering engine 1202 does not process this transaction until it has received all data items related to the particular transaction. In other words, the UI rendering engine 1202 will not create the container and buttons before it has all the information.

The UI client engine 1204 and the UI rendering engine 1202 are as decoupled from each other as possible. The UI client engine 1204 is not aware of where in the UI its data is used, i.e., it does not hold a UI state. The elements are the building blocks of the UI. The elements of the UI component tree 1300 represent the basic UI elements, lists, menus, tab lists, soft keys, etc. Elements are typically specified in a declarative language such as XML or JSON (currently QML which is JSON based), and given different attributes to make them behave as desired. Examples of attributes include rendered attributes, response attributes, and decoding attributes. Rendered attributes refer to any attribute that specifies how a UI element is rendered. Examples of rendered attributes can include color, opacity/transparency, a position on the display, orientation, shape, and size. In various embodiments, the position on the display 110, 160 can be described with any suitable coordinate system including (x,y) coordinates or (x,y,z) coordinates. It can be appreciated however that the position or size of a UI element relative to the virtual screen space may be specified based on a relative dimension such as % length, etc.

Examples of response attributes can include any attribute that specifies how the user interface element responds to commands or inputs, such as for example, a single tap, double tap or swipe. For example, a response attribute can specify a speed of a double tap for the UI element. Decoding attributes can include image decoding priority. A complete UI is a set of elements composited in a visual tree. The elements interpret their associated data - for example, a menu component will interpret the data differently from a list component. The elements react upon events - for example, when a key is pressed or other event is posted to the UI, the elements in the UI will react, e.g., move up and down in a list or opening a sub menu. The elements also bind data to their respective visual tree nodes. The elements have built in UI logic (such as "highlight when pressed", "scroll when flicked", "navigate to tab 3 when tab 3 icon is clicked"), but the application logic (such as "start new application", "find shortest route to bus station", etc.) is in the application code, and typically is triggered by high level events from the elements (e.g. a "Button Click" event detected by the UI rendering engine 1202, and passed to the UI client engine 1204, may trigger the application to "find shortest route").

Visuals define the appearance of elements, and are specified in the visual node trees 1306. In an example, the visuals may be defined in XML. The XML code could be generated independently or using a suitable visuals generation application. A visual could, for example, be a generic list that can be used by several different lists or a highly specialized visualization of a media player with a number of graphical effects and animations. Using different visual representations of elements is an effective way to change the look and feel of the UI. For example, skin changes can readily be done simply by changing the visuals of components in the UI. If the visuals have a reference to a specific data element, the UI client engine 1204 retrieves the data from the application 115 and transmits such data to the UI rendering engine 1202. The UI client engine 1204 also initiates animations on visuals. For example, UI client engine 1204 can create and start animations on properties of UI elements (position, opacity, etc.).

The UI client engine 1204 is unaware of the actual composition and structure of its visuals. For example, when a list item receives focus, the list element will assume that there is animation for focusing in the list item visuals. The UI rendering engine 1202 executes started animations. Animations run without involvement from the UI client engine 1204. In other words, the UI client engine 1204 cannot block the rendering of animations. The UI rendering engine 1202 is a rendering engine that may be specifically optimized for the electronic device. The rendering engine 1202 is capable of rendering a tree 1300of visual elements and effects and performing real time animations. The UI rendering engine 1202 renders the pixels that eventually will be copied on to the physical screen 110 of the electronic device 100, for example. All elements active on the display 110 have a graphical representation in the visual tree 1300. The UI rendering engine 1202 processes touch/key input without UI client engine 1204 involvement to ensure responsiveness (for example, list scrolling, changing of slider values, component animations, etc. run without UI client engine involvement). The UI rendering engine 1202 notifies UI client engine 1204 that a button has been pressed, slider has been dragged, etc. The UI client engine 1204 can then react on the event (for example change the brightness if the slider has been dragged), but as already mentioned above, the UI client engine 1204 does not need to be involved in updating the actual UI, only in responding to events from the UI. The advantages of the UI driven architecture described herein are readily apparent during runtime. Runtime behaviour is defined by what is visible on the display screen 110 of the electronic device 100.

The UI rendering engine 1202 may operate in a single client, single server configuration, similar to the configuration shown in Figure 13. In such a configuration, the UI rendering engine 1202 receive a UI component tree 1300 for an application 115 from a UI client engine 1204 associated with the application 115. Based on the component tree 1300, the UI rendering engine 1202 then determines a visual node tree 1306 for each element, and assembles the visual node trees 1306 into an overall visual node tree corresponding to the UI component tree 1300. The UI rendering engine 1202 then asynchronously receives, from the UI client engine 1204, UI data items related to elements of the UI component tree 1300. The UI rendering engine 1202 populates the visual node tree 1306 with the UI elements, and renders them to the UI in accordance with the visual node tree 1306, independently of further input from the UI client engine 1204. Since the UI client thread, which depends on interaction with the application 115, is separate and independent from the UI rendering thread, the rendering thread is not blocked by the application processing.

When the UI rendering engine 1202 detects a user input in the UI, it communicates the user input to the UI client engine 1204 for further processing. In addition, if necessary, the UI rendering engine 1202 re-renders the UI in response to the user input independently of further input from the UI client engine 1204. For example, if the user input is a button press, the UI rendering engine 1202 re-renders to animate a button associated with the button press. If the UI client engine 1204 determines that the user input received from the UI rendering engine 1202 requires new data, i.e. a "modification" to the UI, the UI client engine 1204 sends further data items invoking the modification to the UI rendering engine 1202, which then re-renders UI in accordance with the further data items and their associated visual node tree 1306, independently of further input from the client UI engine 1204. For example, as described above, the UI client engine 1204 could initiate an animation effect.

According to another aspect, the UI framework 1200 can operate in a configuration wherein a single UI rendering engine 1202 can support multiple UI client engines 1204a, 1204b, etc, e.g., as shown in Figure 12. Thus, multiple applications 115 can coexist on the single UI rendering engine 1202. The UI client engines 1204a, 1204b, etc. each associated with an application 115a, 115b, etc., or an instance of an application 115, while the UI rendering engine 1202 is associated with a display 110. Each UI client engine 1204 determines a corresponding UI component tree 1300 for its respective application. Each UI client engine 1204 also receives inputs from its respective application 115 related to elements of its UI component tree 1300, and determines UI data items related to the inputs.

In operation, the UI rendering engine 1202 receives the UI component trees 1300 from the UI client engines 1204a, 1204b, etc. The UI rendering engine 1402 then joins the plurality of UI component trees 1300 into a single tree structure. To specify the parameters for joining the trees, the UI client engines 1204a, 1204b, etc. can, for example, define or indicate where in their trees 1300 other trees can be inserted. Subject to the logic implemented in the UI rendering engine 1202, the UI client engines 1204a, 1204b, etc. can indicate the location of possible tree insertions in a generic way, such as "here it is ok to insert a background effect". The UI client engines 1204a, 1204b, etc. can also suggest, define or indicate where their tree 1300 should be inserted. This indication can also be performed in a quite general way, such as "I want to insert a particle effect in the background". The UI rendering engine 1202 can then determine an appropriate location to insert the tree within the UI tree structure 1300. Once in possession of a the single tree structure, the UI rendering engine 1202 determines a visual node tree 1306 for the single tree structure, and then populates the visual node tree 1306 with UI data items received from at least one of the plurality of UI client engines 1204, and renders the UI in accordance with the visual node tree 1306 independently of further input from UI client engines 1204, as described above.

Different UI client engines 1204a, 1204b, etc., with different language bindings can coexist in same node/render tree, no matter what runtime limitations the language has (e.g. Python & threads). Since the individual UI component trees 1300 of the applications 38 are combined to a single joint UI tree on the UI rendering engine 1202, the UI that is rendered by the "server" (i.e. the UI rendering engine 1202) will, for end users, appear as if all the application UIs are part of the same application 115.

According to yet another aspect, a single UI rendering engine 1202 can support multiple UI client engines 1204 and their associated applications 115, running on different devices 10, 18 or different platforms, such as a local device and an application 115 running on a remote device, such as in the cloud or on networked server. As above, since the UI client engines 1204 for each application 115 inject their trees and data items into the same tree on the UI rendering engine 1202, all scene graph UI advantages apply. The UI rendering engine 1202 does not need to know anything about a new application, so, for example, the UI client engine 1204 for a new car radio application can be transparently injected into a common UI for an in-vehicle navigation system, for example.

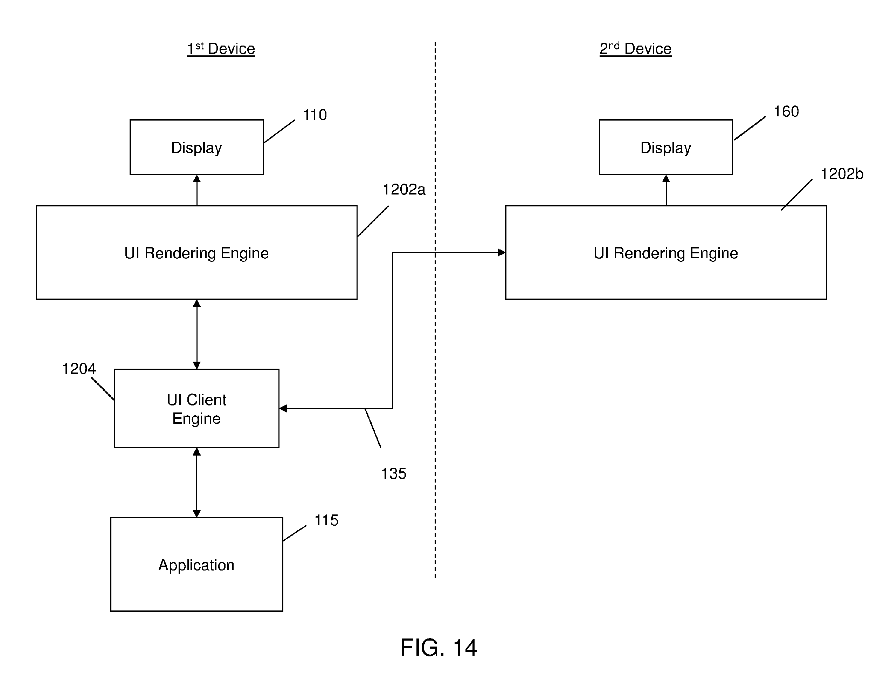

According to another aspect, and as shown in Figure 14, multiple UI rendering engines 1202a, 1202b can support a single UI client engine 1204, and its associated application 115. Such a configuration enables an application 115 on the first mobile device 10 to utilize the screen space of the second mobile device 18 by having the UI framework 1200 on the first mobile device 10 communicate with a second UI rendering engine 1202b on the second mobile device 18.

In this way, the single UI client engine 1204 can inject its tree 1300, and provide data items to multiple devices, such as a desktop computer and a portable electronic device, or a pair of mobile devices 110, 150. Each device can have a separate UI rendering engines 1202a, 1202b, optimized for its particular form factor and display capabilities. Since the UI rendering engines 1202a, 1202b do their own rendering, it is possible to make a distributed UI that is responsive regardless of transport layer performance. According to this aspect, the UI client engine 1204 determines a UI component tree 1300 for the application 115, receives inputs from the application 115 related to elements of the UI component tree 1300, and determines UI data items related to the inputs, as described above. The UI client engine 1204 then interfaces with two or more UI rendering engines 1202, each of which can be associated with a separate display 110, 160 or be designed and optimized for different performance, as described below.

In operation, the UI rendering engines 1202a, 1202b each receive the UI component tree 1300 from the client UI engine 1204, and individually determine a visual node tree 1306 for the UI component tree 1300. The separate UI rendering engines 1202a, 1202b asynchronously receive, from the UI client engine 1204, the UI data items related to elements of the UI component tree 1300, and populate the visual node tree 1306 with the UI data items. Each UI rendering engine 1202 then renders the UI in accordance with the visual node tree 1306 independently of further input from the client UI engine 1204. If a user input, such as a touch event or gesture, is detected by one of the UI rendering engines 1202a, 1202b, the input is communicated back to the UI client engine 1204, and to the other UI rendering engine 1202. Both UI rendering engines 1202a, 1202b can then re-render the UI if appropriate, while the UI client engine 1204 can provide the input to the application 115, or otherwise act upon it.

As a further example (not shown), the single UI client engine 1204 can use several UI rendering engines on a same device. For example, UI rendering engine 1202a could include an OpenGL renderer, while UI rendering engine 1202b could include a software rendering backend/rasterizer. The different UI rendering engines 1202a, 1202b could, for example, be different versions of the rendering engine 1202 on the same device. For example, UI rendering engines 1202a, 1202b could be designed to render at different frame rates to serve different displays on a multi-display device. The UI rendering engines 1202a, 1202b could provide different power management capabilities. For example, using wallpaper as example, UI rendering engine 1202a could render wallpaper or background with less fidelity (lower resolution) to meet power management requirements. The UI rendering engines 1202a, 1202b could form a dynamic cluster, distributing different UI elements of a client application 115 between rendering engines 1202a, 1202b to meet metrics like expected FPS, power management, and resource management. The UI rendering engines 1202a, 1202b can, for example, selectively render different elements or parts of the UI, as defined by the UI client engine 1204. The division of rendering tasks can be, for example, defined in an appropriate markup language, such as XML, or programmatically, such as in an API. Generally, the UI rendering engines 1202a, 1202b work independently to render their element(s) of the UI. However, in a standalone mode, the UI rendering engines 1202a, 1202b could exchange data to improve rendering efficiency.

Referring again to Figure 14, it can be appreciated that the UI frameworks 1200 of the first and second electronic devices 100, 150 enable a client-server configuration to be arranged such that the UI client engine 1204 can have UI elements rendered on both displays 110, 160 by communicating with the corresponding UI rendering engines 1202a, 1202b. Since the UI client engine 1204 removes low-level programming burden from the application 115, the coordination of the UI being rendered across multiple screens can be performed by the UI client engine 1204 to take advantage of the additional screen space when available without the application 115 requiring custom programming for each device type, form factor, screen size, etc.

The various examples described above are provided by way of illustration only and should not be construed to limit the scope of the disclosure. For example, the principles herein apply not only to a smartphone device but to other devices capable of receiving communications such as a laptop computer. Those skilled in the art will readily recognize various modifications and changes that may be made to the principles described herein without following the example examples and applications illustrated and described herein, and without departing from the spirit and scope of the disclosure.

## Claims

1. A method comprising:
detecting (1005), at a first electronic device (100), an application (115) running on the first electronic device at a first time, the first electronic device having an input interface (125);
detecting (1010), at the first electronic device (100), a device pairing, wherein a second electronic device (150) is detected to yield a detected device pairing (135);
generating (1015), at the first electronic device (100), a shared user interface (300) based at least in part on the application (115) and the detected device pairing (135);
displaying (1020), at the first electronic device (100), a first portion (305)of the shared user interface (300);
transmitting, (1025) to the second electronic device (150), data enabling a display of a second portion (310) of the shared user interface (300) at the second electronic device (150);
receiving (1030), at the first electronic device (100), input data from at least one of the input interface (125) and the second electronic device (150) to yield a received input data; and
modifying (1035), at the first electronic device (100), the first portion (305) of the shared user interface (300) based at least in part on the received input data.

2. The method of claim 1, further comprising:
displaying a pop-up window (800) on the first portion (305) of the shared user interface (300); and
receiving a transfer input to open the pop-up window (800) on the second portion (310) of the shared interface (300).

3. The method of claim 2,
wherein the method further comprises in response to the transfer input received, transmitting a request to open the pop-up window (800) on the second portion (310) of the shared interface (300).

4. The method of claim 3, wherein the transfer input is one of a gesture input on the input interface of the first electronic device (100) and a tap input received by the first electronic device (100) from the second electronic device (150) indicating a tap of the second electronic device (150) against the first electronic device (100).

5. The method as recited in any one of the preceding claims, wherein the first portion (305) of the shared user interface (300) is a virtual workspace interface and the second portion (310) of the shared user interface (300) is a content collection.

6. The method as recited in any one of the preceding claims, further comprising generating the first portion (305) of the shared user interface (300) at the first electronic device (100).

7. The method as recited in any one of the preceding claims, further comprising transmitting a request to the second electronic device (150) to generate the second portion (310) of the shared user interface (300).

8. The method as recited in any one of the preceding claims, wherein the received inputs include a chorded input comprising inputs simultaneously received from the input interface (125) of the first electronic device (100) and via the device pairing (135).

9. The method as recited in any one of the preceding claims, further comprising:
determining a position, relative to the first electronic device (100), of the second electronic device (150) communicatively coupled to the first electronic device (100) via the device pairing (135), in the event the second electronic device (150) is detected, to yield a determined position;
generating the second portion (310) of the shared user interface (300) based at least in part on the determined position of the second electronic device (150) and the application (115) running on the first electronic device (100); and
transmitting a request to display the second portion (310) of the shared user interface (300) on the second electronic device (150).

10. The method of claim 9, wherein:
in the event the determined position of the second electronic device (150) is adjacent a bottom side of the first electronic device (100), the second portion (310) is a virtual keyboard (715); and
in the event the determined position of the second electronic device (150) is adjacent a lateral side of the first electronic device (100), the second portion is a tool bar (720).

11. The method as recited in any one of the preceding claims further comprising
determining an orientation of the first electronic device (100) to yield a determined orientation;
generating the second portion (310) of the shared user interface (300) based at least in part on the determined orientation of the first electronic device (100) and the application (115) running on the first electronic device (100); and
transmitting a request to display the second portion (310) of the shared user interface (300) on the second electronic device (150).

12. The method as recited in claim 11, further comprising:
determining a position, relative to the first electronic device (100), of the second electronic device (150) communicatively coupled to the first electronic device (100) via the device pairing (135), in the event the second electronic device (150) is detected, to yield a determined position; and
wherein generating the second portion (310) of the shared user interface (300) is based at least in part on the determined orientation of first electronic device (100), the determined position the second electronic device (150) and the application (115) running on the first electronic device (100).

13. The method as recited in claim 12, wherein:
in the event the determined orientation of the first electronic device (100) is a landscape orientation and in the even the determined position of the second electronic device (150) is adjacent a bottom side of the first electronic device (100), the second portion (310) is a virtual keyboard (715).

14. An electronic device (100) comprising:
a display (110);
an input interface (125) communicatively coupled to the display (110);
a processor (105) communicatively coupled to the display (110) and the input interface (125), the processor (105) configured to execute instructions for a method as recited in any one of claims 1 to 13.

15. A computer readable medium comprising computer executable instructions for performing the method according to any one of claims 1 to 13.

## Amended claims

### Amended claims in accordance with Rule 137(2) EPC.

**1.** A method comprising:
detecting (1005), at a first electronic device (100), an application (115) running on the first electronic device at a first time, the first electronic device having an input interface (125);
detecting (1010), at the first electronic device (100), a device pairing, wherein a second electronic device (150) is detected to obtain a detected device pairing (135);
generating (1015), at the first electronic device (100), a shared user interface (300) based at least in part on the application (115) and the detected device pairing (135), the shared user interface (300) comprising a first portion (305) of what would be displayed in a user interface configured for display on a single display, and a second portion (310) of what would be displayed on the single display, the second portion (310) being supplemental to, and associated with, the first portion (305);
displaying (1020), at the first electronic device (100), the first portion (305) of the shared user interface (300);
transmitting, (1025) to the second electronic device (150), data enabling a display of the second portion (310) of the shared user interface (300) at the second electronic device (150);
receiving (1030), at the first electronic device (100), input data from at least one of the input interface (125) and the second electronic device (150) to obtain a received input data; and
modifying (1035), at the first electronic device (100), the first portion (305) of the shared user interface (300) based at least in part on the received input data.

**2.** The method of claim 1, further comprising:
displaying a pop-up window (800) on the first portion (305) of the shared user interface (300); and
receiving an input to have the pop-up window (800) opened on the second portion (310) of the shared interface (300).

**3.** The method of claim 2,
wherein the method further comprises in response to the input received, transmitting a request to open the pop-up window (800) on the second portion (310) of the shared interface (300).

**4.** The method of claim 3, wherein the input comprises one of a gesture on the input interface of the first electronic device (100) and a tap received by the first electronic device (100) from the second electronic device (150) indicating a tap of the second electronic device (150) against the first electronic device (100).

**5.** The method as recited in any one of the preceding claims, wherein the first portion (305) of the shared user interface (300) comprises a workspace interface and the second portion (310) of the shared user interface (300) comprises a collection of content to be applied to the workspace interface.

**6.** The method as recited in any one of the preceding claims, wherein at least some of the input data is received, at the first electronic device (100), from the second electronic device (150).

**7.** The method as recited in any one of the preceding claims, further comprising transmitting a request to the second electronic device (150) to generate the second portion (310) of the shared user interface (300).

**8.** The method as recited in any one of the preceding claims, wherein the received inputs include inputs simultaneously received from the input interface (125) of the first electronic device (100) and via the device pairing (135).

**9.** The method as recited in any one of the preceding claims, further comprising:
determining a position, relative to the first electronic device (100), of the second electronic device (150) communicatively coupled to the first electronic device (100) via the device pairing (135), in the event the second electronic device (150) is detected, to generate a determined position;
generating the second portion (310) of the shared user interface (300) based at least in part on the determined position of the second electronic device (150) and the application (115) running on the first electronic device (100); and
transmitting a request to display the second portion (310) of the shared user interface (300) on the second electronic device (150).

**10.** The method of claim 9, wherein:
in the event the determined position of the second electronic device (150) is adj acent a bottom side of the first electronic device (100), the second portion (310) is a virtual keyboard (715); and
in the event the determined position of the second electronic device (150) is adjacent a lateral side of the first electronic device (100), the second portion is a tool bar (720).

**11.** The method as recited in any one of the preceding claims further comprising
determining an orientation of the first electronic device (100) to yield a determined orientation;
generating the second portion (310) of the shared user interface (300) based at least in part on the determined orientation of the first electronic device (100) and the application (115) running on the first electronic device (100); and
transmitting a request to display the second portion (310) of the shared user interface (300) on the second electronic device (150).

**12.** The method as recited in claim 11, further comprising:
determining a position, relative to the first electronic device (100), of the second electronic device (150) communicatively coupled to the first electronic device (100) via the device pairing (135), in the event the second electronic device (150) is detected, to generate a determined position; and
wherein generating the second portion (310) of the shared user interface (300) is based at least in part on the determined orientation of first electronic device (100), the determined position the second electronic device (150) and the application (115) running on the first electronic device (100).

**13.** The method as recited in claim 12, wherein:
in the event the determined orientation of the first electronic device (100) is a landscape orientation and in the even the determined position of the second electronic device (150) is adjacent a bottom side of the first electronic device (100), the second portion (310) is a virtual keyboard (715).

**14.** An electronic device (100) comprising:
a display (110);
an input interface (125) communicatively coupled to the display (110);
a processor (105) communicatively coupled to the display (110) and the input interface (125), the processor (105) configured to execute instructions for a method as recited in any one of claims 1 to 13.

**15.** A computer readable medium comprising computer executable instructions for performing the method according to any one of claims 1 to 13.
